# EUROPEAN PATENT APPLICATION

(11) **EP 4 583 073 A1**
(43) Date of publication of application: **09.07.2025**
(21) Application number: 23859946.8
(22) Date of filing: 01.08.2023
(51) Int. Cl.: G07G 1/00, G07G 1/01

(54) **INFORMATION PROCESSING DEVICE AND INFORMATION PROCESSING METHOD**

(30) Priority: 29.08.2022 JP 2022136048
(71) Applicant: Kyocera Corporation, Kyoto-shi, Kyoto 612-8501 (JP)
(72) Inventor: DAI Xiaoyan, Kyoto-shi, Kyoto 612-8501 (JP); TAMAI Naoyuki, Kyoto-shi, Kyoto 612-8501 (JP)
(74) Representative: Viering, Jentschura & Partner mbB Patent- und Rechtsanwälte
(86) International application number: PCT/JP2023/028138
(87) International publication number: WO 2024/048177

(57) **Abstract**

An information processing device includes an acquisition unit that receives a captured image including a first object image as an image of a first object and a controller that causes a display to display the first object image and a recognition result of the first object. Upon receiving a selected one of the first object image and the recognition result of the first object from an input unit, the controller causes the display to display with emphasis an unselected other of the first object image and the recognition result of the first object.

## Description

### CROSS-REFERENCE TO RELATED APPLICATIONS

This application claims priority from Japanese Patent Application No. 2022-136048 filed August 29, 2022 in Japan and the entire content of the application is incorporated herein by reference.

### TECHNICAL FIELD

The disclosure relates to an information processing device and an information processing method.

### BACKGROUND OF INVENTION

Conventionally known techniques capture an image of an object with an imaging device or the like for payment process of a price of an object and recognize which object the object is. For example, Patent Literature 1 discloses an object recognition device that includes an image interface receiving an image that is obtained by imaging a predetermined location where multiple objects are placed.

### CITATION LIST

### PATENT LITERATURE

Patent Literature 1: Japanese Unexamined Patent Application Publication No. 2018-129038

### SUMMARY

In an embodiment of the disclosure, an information processing device includes an acquisition unit and a controller. The acquisition unit receives a captured image including a first object image as an image of a first object. The controller causes a display to display the first object image and a recognition result of the first object. Upon receiving from an input unit a selected one of the first object image and the recognition result of the first object, the controller causes the display to display with emphasis an unselected other of the first object image and the recognition result of the first object.

In an embodiment of the disclosure, an information processing method includes receiving an image including at least one object; recognizing what object an object included in the image is; outputting a recognized recognition result and the image; and in response to receiving an input from a user selecting one of the outputted recognition result and the object, outputting a display screen to display with emphasis an other one not selected by the user.

### BRIEF DESCRIPTION OF THE DRAWINGS

FIG. 1 is a schematic configuration of a payment system in an embodiment of the disclosure.
FIG. 2 is a schematic configuration of an information processing system illustrated in FIG. 1.
FIG. 3 is a block diagram of an information processing device illustrated in FIG. 2.
FIG. 4 is an image of a recognition result displayed on a display in an embodiment.
FIG. 5 is an image that emphasizes a first object among objects displayed on the display in an embodiment.
FIG. 6 is an image that emphasizes a second object among the objects displayed on the display in an embodiment.
FIG. 7 is an image that emphasizes a third object among the objects displayed on the display in an embodiment.
FIG. 8 is an image that corrects an incorrect object name among object names displayed on the display in an embodiment.
FIG. 9 is a flowchart illustrating a display process in an embodiment.
FIG. 10 is an image of a recognition result displayed on the display in variation 1.
FIG. 11 is an image that emphasizes objects recognized to be in a plural number among the objects displayed on the display in variation 1.
FIG. 12 is an image that emphasizes only one of the objects recognized to be in the plural number among the objects displayed on the display in variation 1.
FIG. 13 is a flowchart illustrating a display process in the variation 1.
FIG. 14 is an image that emphasizes an object name of objects recognized to be in a plural number among the objects displayed on the display in variation 2.
FIG. 15 is an image that emphasizes only one of the object names of the objects recognized to be in the plural number among the objects displayed on the display in variation 2.
FIG. 16 is an image that emphasizes object names of objects recognized to be in the plural number among the objects displayed on the display in the variation 2.
FIG. 17 is a flowchart illustrating a display process in the variation 2.
FIG. 18 is an image that emphasizes a first object name among object names displayed on the display in variation 3.
FIG. 19 is a flowchart illustrating a display process in variation 3.
FIG. 20 is an image that emphasizes one object among objects displayed on the display in variation 4 and one object of object names.
FIG. 21 is a flowchart illustrating a display process in the variation 4.
FIG. 22 is an image that emphasizes an object and an object name displayed on the display in variation 5.
FIG. 23 is a flowchart illustrating a display process in the variation 5.
FIG. 24 is an image that emphasizes an object and an object name displayed on the display in variation 6.
FIG. 25 is a flowchart illustrating a display process in the variation 6.
FIG. 26 is an image that emphasizes one object among objects displayed on the display in variation 7.
FIG. 27 is a flowchart illustrating a display process in the variation 7.
FIG. 28 is an image that emphasizes one object among objects displayed on the display in variation 8.
FIG. 29 is a flowchart illustrating a display process in the variation 8.

### DESCRIPTION OF EMBODIMENTS

When multiple objects are recognized from a single image and a recognition result is displayed to a user in a conventional use of an object recognition device including an image interface, the user is forced to confirm at a time the multiple objects and the recognition result displayed in the image. At this time, the user may have difficulty in determining whether the correspondence between the multiple objects and the recognition result is right or wrong. For this reason, payment process of the user has been delayed.

An embodiment of the disclosure may expedite the payment process of the user.

Embodiments of the disclosure are described below with reference to the drawings.

### (Configuration of System)

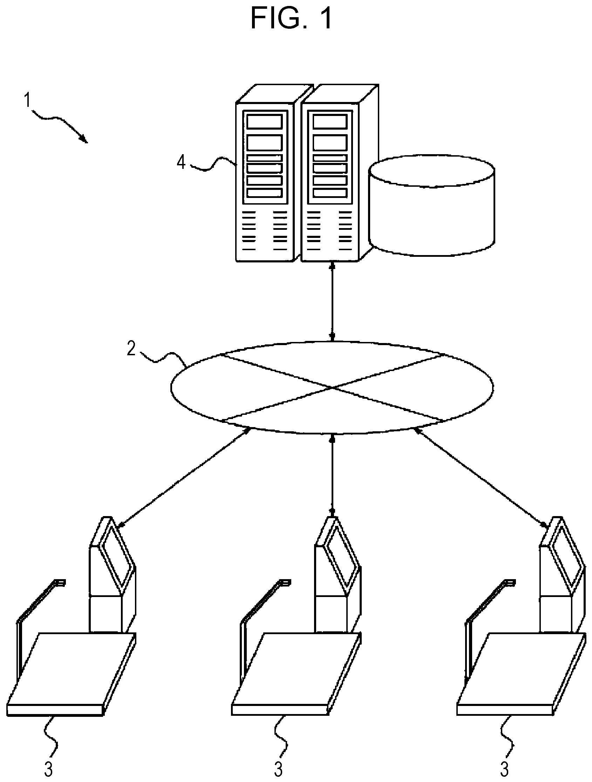

A payment system 1 illustrated in FIG. 1 may be configured as a POS (Point Of Sales) system. The payment system 1 includes at least one information processing system 3 and a server 4. In the embodiment, the payment system 1 includes multiple information processing systems 3.

The information processing system 3 and the server 4 may communicate with each other via a network 2. The network 2 may be any network including the Internet.

The information processing system 3 may be installed at any store. For example, the information processing system 3 may be installed at a convenience store, a supermarket, a restaurant, or the like.

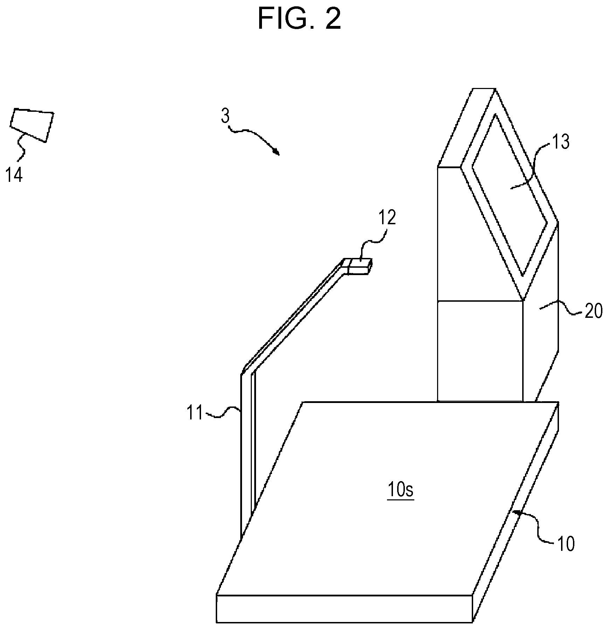

The information processing system 3 in the embodiment may be configured as an unmanned regi. The unmanned regi may also be referred to as a self-regi. Note that "regi" is an abbreviation of a cash register and, for example, is used to pay for an object to be purchased. For example, in the information processing system 3, a user as a customer of the store places an object to be purchased on a table 10 as illustrated in FIG. 2. The information processing system 3 captures the image of the object placed by the user. The information processing system 3 recognizes which object the object included in the captured image generated through image capturing is. By recognizing the object, the information processing system 3 may calculate a total sum of the object which is charged to the user. Herein, when an imaging device, such as a camera, images the object, multiple objects may be placed on the table 10. The information processing system 3 is not limited to the unmanned regi but may be a manned cash regi or a semi-self regi.

The information processing system 3 may be configured as regi in the POS system. The information processing system 3 transmits via the network 2 to the server 4 a process result including the total sum of the objects, information on each of the objects, and a price of each of the objects.

The server 4 receives the process result of the information processing system 3 from the information processing system 3 via the network 2. In response to the received process result, the server 4 manages a stock status and the like of the store where the information processing system 3 has been installed.

Referring to FIG. 2, the information processing system 3 includes a first imaging unit 12 and an information processing device 20. The information processing system 3 may further include the table 10, a support pillar 11, the display 13 and a second imaging unit 14. In the embodiment, the information processing device 20 may be configured as a device separate from the first imaging unit 12 and the display 13. However, the information processing device 20 may be integrated with at least one selected from the group consisting of, for example, the display 13, the first imaging unit 12, the support pillar 11, the table 10, and the second imaging unit 14.

The table 10 includes a top surface 10s. The user may place on the top surface 10s an object they want to purchase. In the embodiment, the user places on the top surface 10s only an object they want to purchase but without limitation to this, the user may place the object in a state enclosed in a shopping basket or a shopping bag. In the embodiment, the top surface 10s has an almost rectangular shape but is not limited to this and may have any shape.

The support pillar 11 supports the first imaging unit 12. The support pillar 11 extends upward from a side portion of the table 10 toward the space above the top surface 10s. Note that a method of supporting the first imaging unit 12 is not limited to the support pillar 11. The support pillar 11 may support the first imaging unit 12 in any method that the first imaging unit 12 is able to image at least part of the top surface 10s of the table 10.

The first imaging unit 12 may generate an image through image capturing. The first imaging unit 12 is secured to the support pillar 11 such that the first imaging unit 12 is able to image at least part of a surface of the table 10, for example, at least part of the top surface 10s. The first imaging unit 12 may be secured such that an optical axis thereof is perpendicular to the top surface 10s. For example, the first imaging unit 12 is secured such that the first imaging unit 12 is able to image the entire surface of the top surface 10s of the table 10 and the optical axis of the first imaging unit 12 is perpendicular to the top surface 10s of the table 10. The first imaging unit 12 may be secured to the leading end of the support pillar 11. The first imaging unit 12 may image consecutively at any frame rate. The first imaging unit 12 may capture a moving image. For example, the first imaging unit 12 may be a camera.

The display 13 may be any display. The display 13 displays an image transmitted from the information processing device 20. The display 13 may operate as a touch screen of an input unit to be described below.

The second imaging unit 14 may generate an image through image capturing. The second imaging unit 14 is secured to a ceiling above the table 10 such that the second imaging unit 14 is able to image the table 10 and the surroundings of the table 10. An image captured by the second imaging unit 14 includes a user in front of the table 10 and other users who are lining to use the information processing system 3. The second imaging unit 14 may image the table 10 at an angle different from the angle of the first imaging unit 12. In one case, the table 10 imaged at multiple angles may allow to be recognized an object that is difficult to recognize in the image captured by the first imaging unit 12 but is recognizable in the image captured by the second imaging unit 14. The second imaging unit 14 may capture images consecutively any frame rate. The second imaging unit 14 may capture a moving image. For example, the second imaging unit 14 may be a camera.

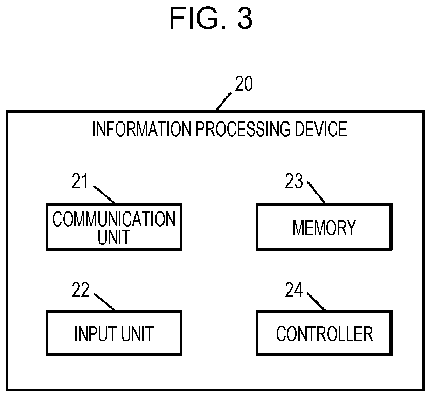

Referring to FIG. 3, the information processing device 20 includes a communication unit 21, an input unit 22, a memory 23, and a controller 24.

The communication unit 21 includes at least one communication module connectable to the network 2. The communication module may be a communication module complying with standards, for example, for a wired LAN (local area network), a wireless LAN, or the like. The communication unit 21 is connected to the network 2 via the wired LAN or the wireless LAN via the communication module.

The communication unit 21 includes a communication module that is communicable with the first imaging unit 12, the display 13, and the second imaging unit 14. The communication module is a communication module that complies with standards for communication lines. Communication via the communication unit 21 may be performed via at least one of a wired communication or a wireless communication. Via the communication module, the communication unit 21 works as an acquisition unit that receives from at least one of the first imaging unit 12 or the second imaging unit 14 an image of an object placed on the top surface 10s of the table 10. Via the communication module, the communication unit 21 may communicate with a weight sensor 81 described below.

The input unit 22 may receive an input from a user. The input unit 22 includes at least one input interface that is able to receive an input from the user. The input interface is, for example, a touch screen that is integrated with a physical key, a capacitive key, a pointing device, a microphone or the display 13. In the embodiment, the input unit 22 receives an input to the touch screen that is integrated with the display 13.

The memory 23 includes at least two types of memories selected from the group consisting of at least one semiconductor memory, at least one magnetic memory, and at least one optical memory. The semiconductor memory is, for example, a RAM (random access memory), a ROM (read only memory), or the like. The RAM is, for example, an SRAM (static random access memory), a DRAM (dynamic random access memory), or the like. The ROM is, for example, an EEPROM (electrically erasable programmable read only memory) or the like. The memory 23 may work as a main memory, an auxiliary memory, or a cache memory. The memory 23 stores data used in the action of the information processing device 20 and data obtained in the action of the information processing device 20.

The controller 24 includes at least one processor, at least one dedicated circuit, or a combination thereof. The processor is a general-purpose processor, such as a CPU (central processing unit) or a GPU (graphics processing unit), or a dedicated processor specialized in a particular process. The dedicated circuit is for example, a FPGA (field-programmable gate array), an ASIC (application specific integrated circuit), or the like. The controller 24 performs a process related to the action of the information processing device 20 while controlling each unit of the information processing device 20.

The controller 24 acquires a selection, performed by the input unit 22, between an object included in an image and a recognition result of the object. For example, a user who wants to confirm the recognition result of the object inputs the selection via the input unit 22. Upon receiving the selection, the controller 24 transmits to the display 13 via the communication unit 21 a signal for displaying with emphasis one that is not selected by the user between the object included in the image and the recognition result of the object. When the display 13 and the information processing device 20 are configured as a unitary device, the controller 24 may transmit the signal to the display 13 not via the communication unit 21.

### (Display Process)

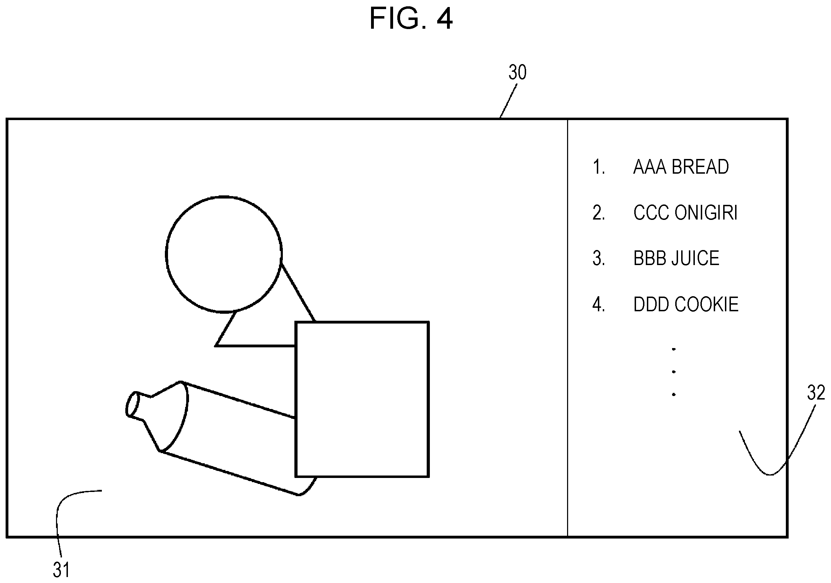

A procedure from the start of payment to a process of displaying a recognition result with emphasis is described below with reference to FIG. 4, FIG. 5 and FIG. 6.

The controller 24 receives at the input unit 22 an input instructing payment to be started. A user who wants to make the payment of an object may enter the input at the input unit 22. When the user enters the input at the input unit 22, the user places an object they want to purchase on the top surface 10s of the table 10. The user may enter to the input unit 22 the input instructing the payment to be started after placing the object on the top surface 10s of the table 10.

The controller 24 receives an image captured by the first imaging unit 12 or the second imaging unit 14. The controller 24 may receive images captured by the first imaging unit 12 and the second imaging unit 14. In the embodiment, the controller 24 receives the captured image by receiving the image, captured by the first imaging unit 12, at the communication unit 21. The captured image includes an image of an object the user has placed on the top surface 10s of the table 10.

The controller 24 recognizes which object the object included in the received captured image is. In the embodiment, the controller 24 recognizes which object the object is by executing an object recognition process on the captured image. The object recognition process is a process that identifies which object the object is by detecting an image of the object included in the captured image. The controller 24 may execute the object recognition process by using a learning model that is generated through machining learning, such as deep learning. In the embodiment, the controller 24 acquires a recognition result by identifying an object name of the object through object recognition. Having identified an object name, the controller 24 may identify the number of objects recognized. In the embodiment, note that the recognition result of the object recognition process includes data on an object name and the number of objects recognized. Note that the object recognition process is not limited to the execution performed by the controller 24 in the information processing device 20 but may be executed by an external server or the like. When the external server executes the object recognition process, the external server, in more detail, receives the captured image via the communication unit 21 and executes the object recognition process. When the external server executes the object recognition process, the controller 24 acquires the recognition result from the external server via the communication unit 21. The object recognition may identify information, such as ID, which, in place of an object name, identifies an object. **In** this case, the controller 24 may acquire the object name corresponding to the identified ID, using a correspondence table or the like stored on the memory 23.

The controller 24 outputs the recognition result to the display 13. **In** the embodiment, the controller 24 notifies a user of the recognition result by outputting an image indicating the recognition result to the display 13. In the embodiment, the controller 24 outputs the recognition result to the display 13 when the controller 24 recognizes which object the object included in the captured image is, but without limitation to this, the controller 24 may output the recognition result to the display 13 when the input unit 22 receives from a user an instruction to display a confirmation screen. The instruction to display the confirmation screen may be an action of pressing a key to shift to the confirmation screen.

Referring to FIG. 4, for example, the controller 24 causes the display 13 to display an image 30. The image 30 includes an image 31 and an image 32. The image 31 may be displayed on a left portion of the display 13 and the image 32 may be displayed on a right portion of the display 13. The image 31 is an image captured by the first imaging unit 12. The image 31 includes objects which the user has placed on the table 10. The image 32 displays object names as the recognition result of the objects the user has placed on the table 10. At this time, information or the like related to the number of each object and the price of each object may be displayed together with the object names on the image 32. The object names displayed on the image 32 may be displayed in the order at which the information processing device 20 has recognized the object names. The object names on the image 32 may be displayed in the order of high to low price or low to high price of each object. In this case, the user may easily confirm an object that has a large effect on the magnitude of the total sum. The object names on the image 32 may be displayed in the order of high to low recognition accuracy or low to high recognition accuracy of each object. In this case, the user may easily confirm an object that has a large effect on the accuracy of the total sum. The object names on the image 32 may be displayed in the order of large to small size or small to large size of each object within the image 31. In this case, the user may easily confirm from a large and noticeable object or from a small and hard-to-find object. The object names on the image 32 may be displayed in the order of large to small number or small to large number of the same object. In this case, the user may easily confirm objects purchased in a large quantity. According to any criteria, the user may change the display order of the object names displayed on the image 32 by operating the input unit. Information on the prices of the objects may be pre-stored in association with the object names on the memory 23.

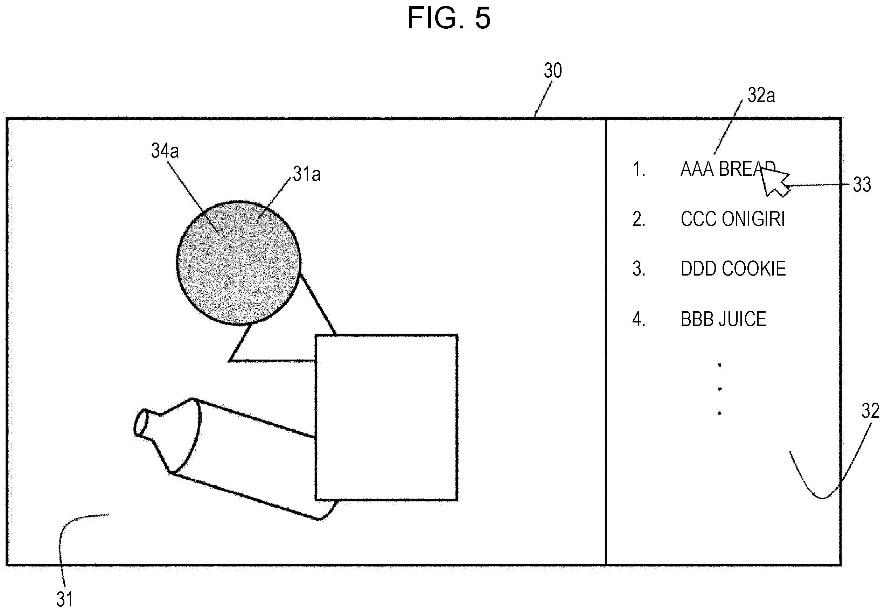

When the image 30 illustrated in FIG. 4 is displayed on the display 13, a user confirms the recognition result displayed on the display 13. The user may select a first object name 32a using a cursor 33 as illustrated in FIG. 5 to confirm whether the recognition result displayed on the image 32 is correct. The selection of the first object name 32a may be based on an action of superimposing the cursor 33 on the first object name 32a followed by pressing a key. Once the user has selected the first object name 32a, an emphasis image 34a superimposed on a first object image 31a serving as an image of the object corresponding to the first object name 32a is displayed. The emphasis image 34a may be, for example, an image that forms a frame along the external shape of the first object image 31a. The displaying of the emphasis image 34a emphasizes the first object image 31a in comparison with other object images and the user can confirm a correspondence relationship between the emphasized object image and the first object name 32a. In the embodiment, the user selects the first object name 32a using the cursor 33, but without limitation to this, the user may select the first object name 32a by directly touching the first object name 32a on a touch screen or by pointing to the first object name 32a included in the image 32 using the hand of the user. When the touch screen is used, the cursor 33 may not be used. In the embodiment, the emphasis image 34a is displayed in a shape matching the external shape of the corresponding first object image 31a, but without limitation to this, the emphasis image 34a may fully overlap the first object image 31a. The emphasis image 34a may be, for example, the bounding rectangle of the first object image 31a. In the embodiment, the emphasis image 34a has the same size as the first object image 31a but, without limitation to this, an image larger than the first object image 31a or an image smaller than the first object image 31a may be displayed.

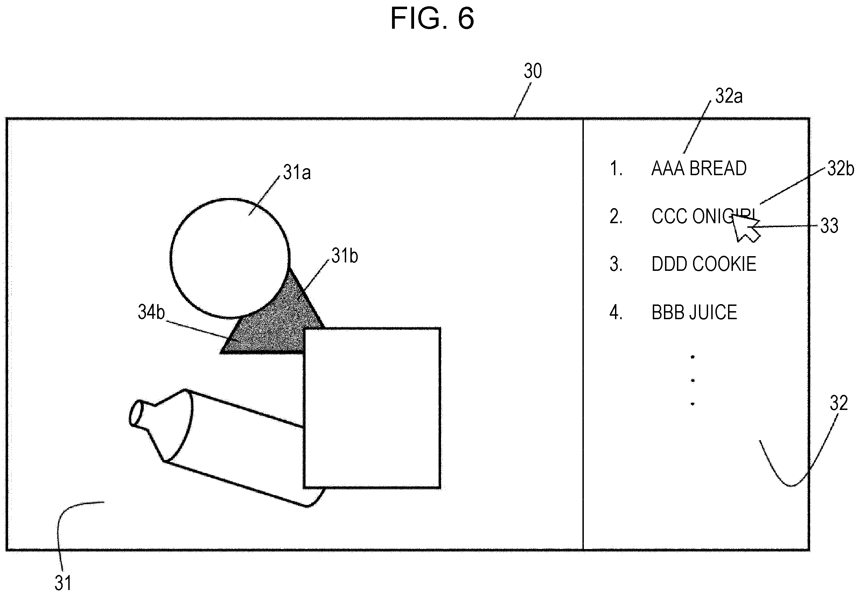

After confirming the first object image 31a displayed with emphasis by the emphasis image 34a, the user newly selects a second object name 32b as another object using the cursor 33 as illustrated in FIG. 6. At this time, the controller 24 erases the emphasis image 34a superimposed on the first object image 31a that is already confirmed, and superimposes an emphasis image 34b on a second object image 31b corresponding to the newly selected second object name 32b. At this time, the controller 24 may display the first object name 32a at the lower-most row by changing the first object name 32a in position. Alternatively, the controller 24 may segment the region of the image 32 in an up-down direction into a first region and a second region, display an unselected object name 32 in the first region and move the selected first object name 32a to the second region. The user may easily find the object name 32 to be confirmed, by displaying the selected object name 32 and the unselected object name 32 in a distinguishable way. The timing of erasing the superimposed emphasis image 34a is not limited to when the second object name 32b is newly selected. The superimposing emphasis image 34a may be erased when the user moves the cursor selecting the first object name 32a from the first object name 32a. The superimposing emphasis image 34a may be erased when the user presses a key that deletes the displaying of the emphasis image 34a. The superimposing emphasis image 34a may be erased when a key to shift to a payment process to pay the prices of the object is pressed. The superimposing emphasis image 34a may be erased after a predetermined time elapse from when the user inputs the selection of the first object name 32a. In the example in FIG. 6, the second object image 31b is positioned lower than the object in the first object image 31a. Therefore, the first object image 31a causes part of the second object image 31b to be invisible. In such a case, the outline of the second object image 31b may be drawn as an emphasis image within an area where the second object image 31b and the first object image 31a overlap each other. Alternatively, a second object image 31b' imaged before the objects are placed on the table 10 may be displayed in superimposition on the second object image 31b.

Since in this way, the corresponding first object image 31a or the corresponding second object image 31b is displayed with emphasis, the user may easily compare the recognition result with the object placed on the table 10. With this configuration, the user may easily confirm whether the recognition result is correct.

### (Correction Process)

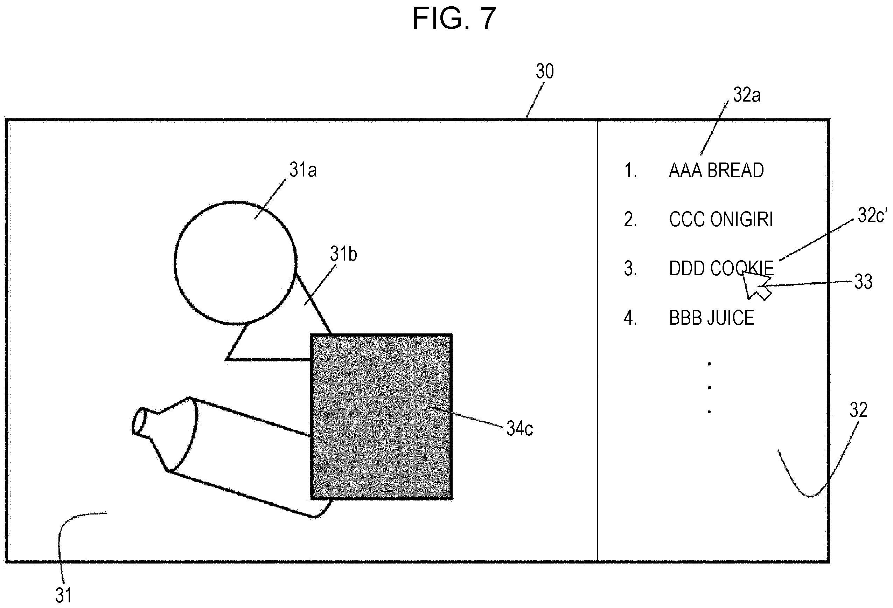

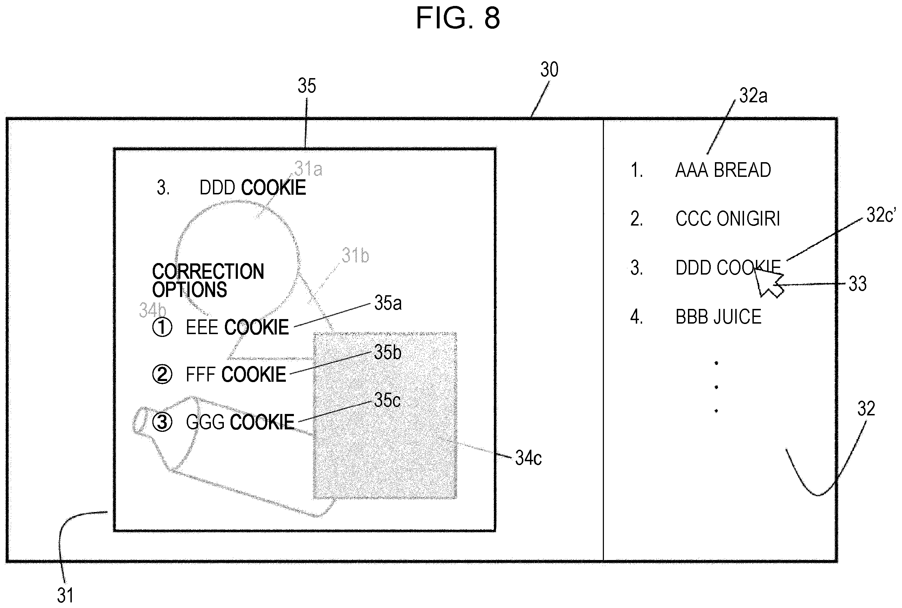

A process to correct an incorrect recognition result about the displayed objects is described with reference to FIG. 7 and FIG. 8.

When the user selects an incorrectly recognized object name 32c' displayed on the display 13, an emphasis image 34c is displayed in superimposition on a third object image 31c that the information processing device 20 has determined to correspond to the object name 32c'. At this time, as the object name corresponding to the third object image 31c, a third object name 32c is correct but the third object name 32c' is incorrect. When the user finds that the incorrect third object name 32c' is displayed, the user may enter an input to correct the incorrect third object name 32c'. The input to correct the incorrect third object name 32c' may be an input to select the incorrect third object name 32c' again, an input to select the incorrect third object name 32c' for a predetermined time period or longer, an input to press a key that corrects an object name included in the information processing device 20 or the image 30, or a selection of the third object image 31c determined to correspond to the incorrect third object name 32c'.

Upon receiving an input to correct the incorrect third object name 32c' from the user, the controller 24 causes the display 13 to display an image 35 illustrated in FIG. 8. The emphasis image 35 includes multiple object names as correction options 35a, 35b, and 35c, determined to correspond to the third object image 31c. The correction option 35a from among these correction options is identical to a third object name 32c that correctly corresponds to the third object image 31c. The correction options 35a, 35b, and 35c may be displayed in the order of from high to low certainty or low to high certainty of the recognition result, in the alphabetical order of the object names, or in the order from high to low price or low to high price of each of the objects. Upon determining that the correction option 35a is the correct third object name 32c, the user enters an input to select the correction option 35a in the image 35. Upon receiving the input to select the correction option 35a in the image 35, the controller 24 corrects the incorrect third object name 32c' included in the image 32 to the correction option 35a. Upon receiving the input to select the correction option 35a, the controller 24 may transmit an instruction to output an image and sound used to confirm the change of the third object name 32c' to the correction option 35a. When the correction options 35a, 35b, and 35c do not include the object name corresponding to the second object image 31b, the user may directly input the corresponding object name.

### (Action of System)

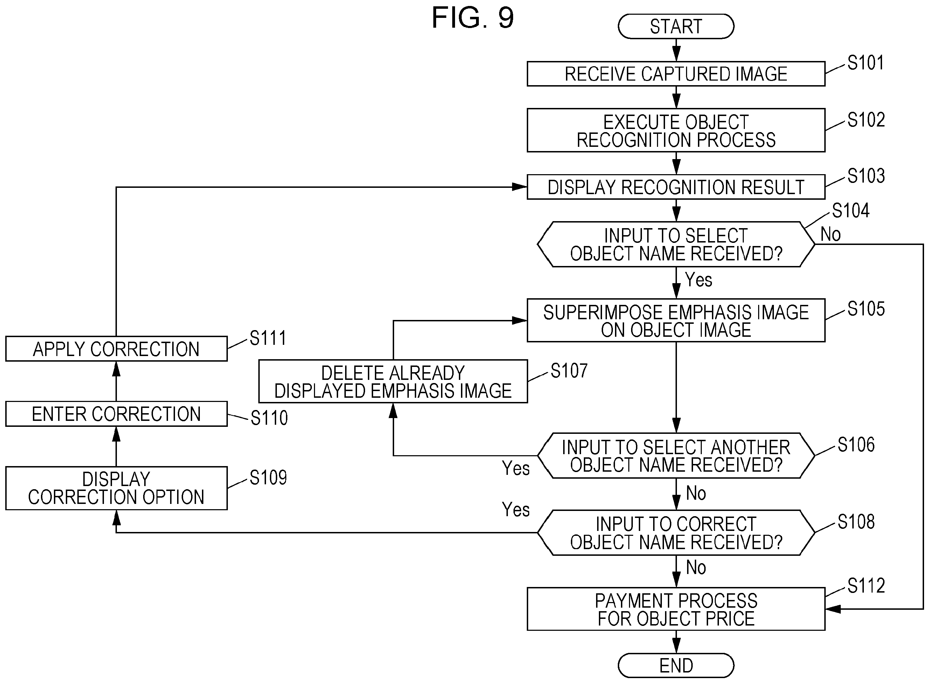

FIG. 9 is a flowchart illustrating operations in an information processing method of an embodiment of the disclosure. The information processing method includes step S101 through step S112. For example, when the input unit 22 receives an input to instruct payment start, the controller 24 starts a process in step S101.

The controller 24 acquires data on a captured image by receiving an image from the first imaging unit 12 via the communication unit 21 (step S101). The controller 24 executes the object recognition process to the captured image received in the process in step S101 (step S102). The controller 24 acquires the recognition result by executing the object recognition process.

The controller 24 causes the display 13 to display an image indicating the recognition result acquired in the process in step S102 (step S103). For example, the controller 24 causes the display 13 to display the image 30 illustrated in FIG. 4.

The controller 24 determines whether the input unit 22 has received the input to select the first object name 32a in the image 32 (step S104).

The controller 24 proceeds to a process in step S105 upon determining that the input unit 22 has received the input to select the first object name 32a (step S104: YES). For example, when the input unit 22 has received a touch input on the first object name 32a illustrated in FIG. 4, the controller 24 determines that the input unit 22 has received the input to select the first object name 32a.

The controller 24 proceeds to a process in step S108 upon determining that the input unit 22 has not received the input to select the first object name 32a (step S104: NO). For example, when the input unit 22 has received from the user an input to shift to a payment process, the controller 24 may determine that the input unit 22 has not received the input to select the first object name 32a. Note that when a predetermined time period has elapsed without any operation since the displaying of the image 30 illustrated in FIG. 4, the controller 24 may determine that the input unit 22 has not received the input to select the first object name 32a.

In a process in step S105, the controller 24 transmits to the display 13 an instruction that causes the display 13 to display the emphasis image 34a superimposed on the first object image 31a in response to the input that is from the user via the input unit 22 and selects the first object name 32a.

The controller 24 determines whether the input unit 22 has received the input to select the second object name 32b in the image 32 (step S106).

The controller 24 proceeds to a process in step S107 upon determining that the input unit 22 has received the input to select the second object name 32b (step S106: YES). For example, when the input unit 22 has received a touch input on the second object name 32b illustrated in FIG. 6, the controller 24 determines that the input unit 22 has received the input to select the second object name 32b.

The controller 24 proceeds to a process in step S112 upon determining that the input unit 22 has not received the input to select the second object name 32b (step S106: NO). For example, when the input unit 22 has received the input to shift to the payment process of the user, the controller 24 determines that the input unit 22 has not received the input to select the second object name 32b. Note that a predetermined time period has elapsed without any operation, the controller 24 may determine that the input unit 22 has not received the input to select the second object name 32b.

In a process in step S107, the controller 24 transmits to the display 13 an instruction that causes the display 13 to delete the emphasis image 34a that is already displayed and superimposed on the first object image 31a in response to the input that is from the user via the input unit 22 and selects the second object name 32b. The controller 24 then returns to the process in step S105.

The controller 24 determines whether the input unit 22 has received an input to correct the third object name 32c' in the image 32 (step S108).

If the input unit 22 has received the input to correct the third object name 32c' (step S108: YES), the controller 24 proceeds to step S109. For example, when the input unit 22 has received a touch input to hold down the third object name 32c' in excess of a predetermined time period as illustrated in FIG. 7, the controller 24 determines that the input unit 22 has received the input to correct the third object name 32c'.

The controller 24 proceeds to step S112 upon determining the input unit 22 has not received the input to correct the third object name 32c' (step S108: NO). For example, when the controller 24 determines that the input unit 22 has received an input to shift to the payment process of the user, the controller 24 determines that the input unit 22 has not received the input to correct the third object name 32c'. Note that when a predetermined time period has elapsed without any operation of the user, the controller 24 may determine that the input unit 22 has not received the input to correct the third object name 32c'.

In a process in step S109, the controller 24 displays an image 35. The image 35 includes the correction options 35a, 35b, and 35c as the object names determined to correspond to the third object image 31c.

The controller 24 receives at the input unit 22 a user input as a correction input to select a correction option included in the image 35 displayed in step S109 (step S110). The correction input is not limited to the selection of the correction option but may be an input of an object name by the user.

In response to the correction input entered in step S110, the controller 24 corrects the object name 31c' corresponding to the third object image 31c (step S 111). The controller 24 then returns to the process in step S103.

In a process in step S112, the controller 24 performs the payment process to settle the payment for the object in accordance with the recognition result in the process in step S102.

In this way, instead of performing the payment process immediately after displaying the recognition result to the user via the display 13, the controller 24 in the information processing device 20 displays with emphasis the object image to confirm the recognized object. In this configuration, the user may confirm smoothly whether the object image displayed has been correctly recognized. The user may also perform quickly the payment process.

### (Variation 1 of Display Process)

Variation 1 of the display process is described below. Note that the description of a procedure duplicating the above-described display process is omitted.

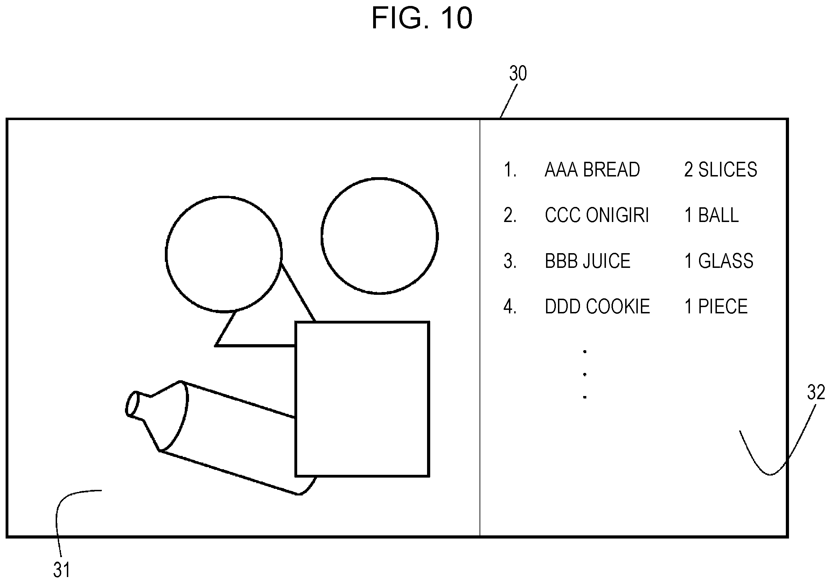

Referring to FIG. 10, the controller 24 causes the display 13 to display the image 30. At this time, differently from in FIG. 4, the controller 24 may display each object name together with a quantity thereof instead of displaying a plural number of the same object name. For example, when the controller 24 recognizes two anpans, the controller 24 may display the number of anpans as 2. Concerning an object of the same type, the controller 24 may display the number of objects and one object name serving as a high-level concept of the object. As an example, when an anpan and a cream bun are recognized, the controller 24 may display a presence of two slices of sweet buns or bread as a high-level concept.

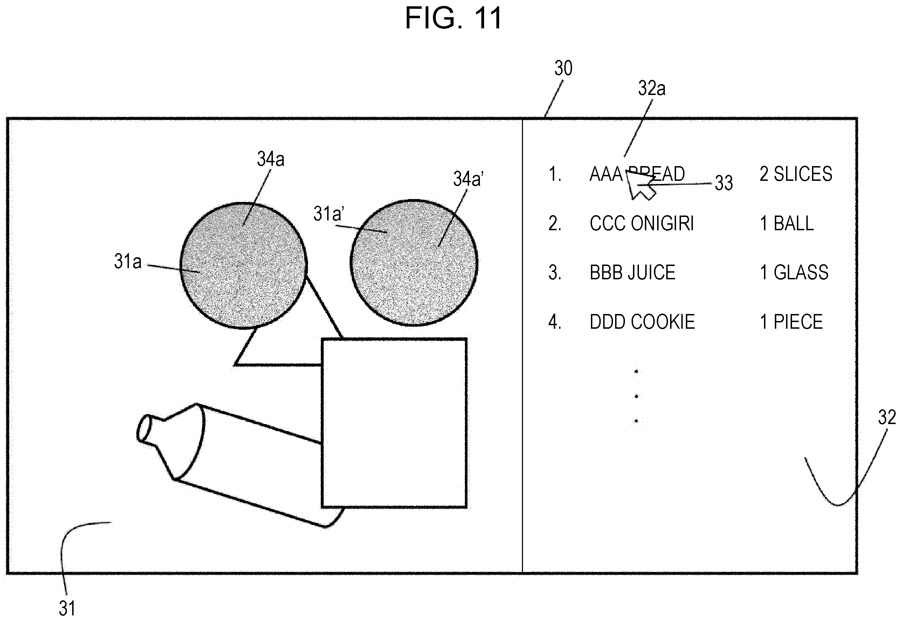

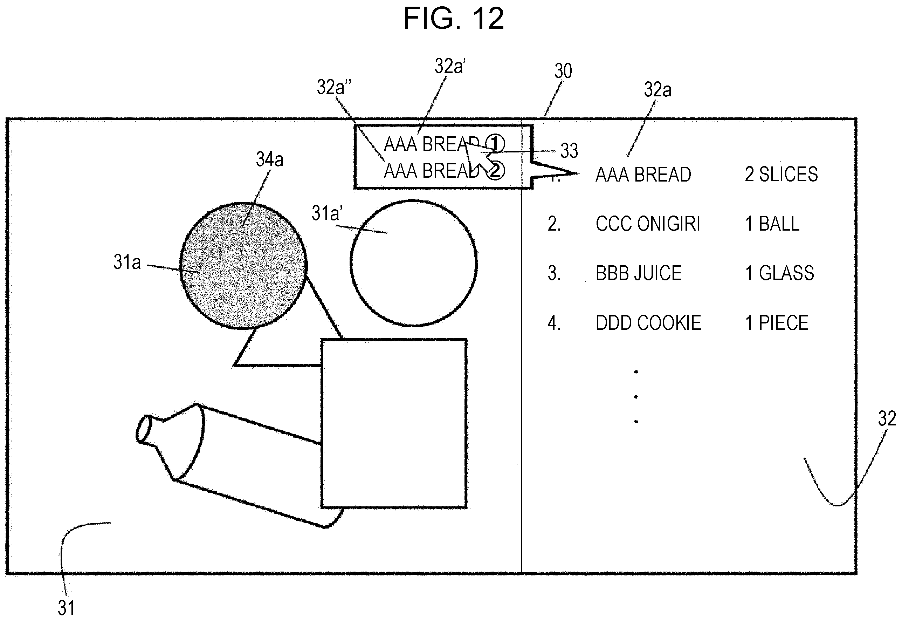

When the image 30 is displayed on the display 13 as illustrated in FIG. 10, the user confirms the recognition result displayed on the display 13. At this time, in order to confirm whether the recognition result displayed on the image 32 is correct, the user selects the first object name 32a using the cursor 33 as illustrated in FIG. 11. In the variation, the display 13 displays a single first object name 32a and indicates that corresponding objects are two. When the user selects the first object name 32a, the display 13 displays the emphasis images 34a and 34a' superimposed on the first object images 31a and 31a' corresponding to the first object name 32a. The emphasis images 34a and 34a' are concurrently displayed at this time, but without limitation to this, when the user selects the first object name 32a, the display 13 displays in the image 30 the first object names 32a' and 32a" corresponding to the first object name 32a as illustrated in FIG. 12, and furthermore, when the user selects the first object name 32a', the display 13 may display the emphasis image 34a corresponding to the corresponding object image 32a. As an example, when the first object name 32a is an anpan, anpans may be displayed as both the first object names 32a' and 32a", and when the user selects to display any anpan (the first object name 32a' or 32a"), the display 13 may display the emphasis image 34a in superimposition on the corresponding anpan (the first object images 31a and 31a'). When the first object name 32a is a sweet bun as a high-level concept, the anpan may be displayed as the first object name 32a' and the cream bun may be displayed as the first object name 32a", and when the user selects the anpan (the first object name 32a'), the emphasis image 34a may be displayed in superimposition on the anpan (the first object image 31a).

### (Action of System of Variation 1)

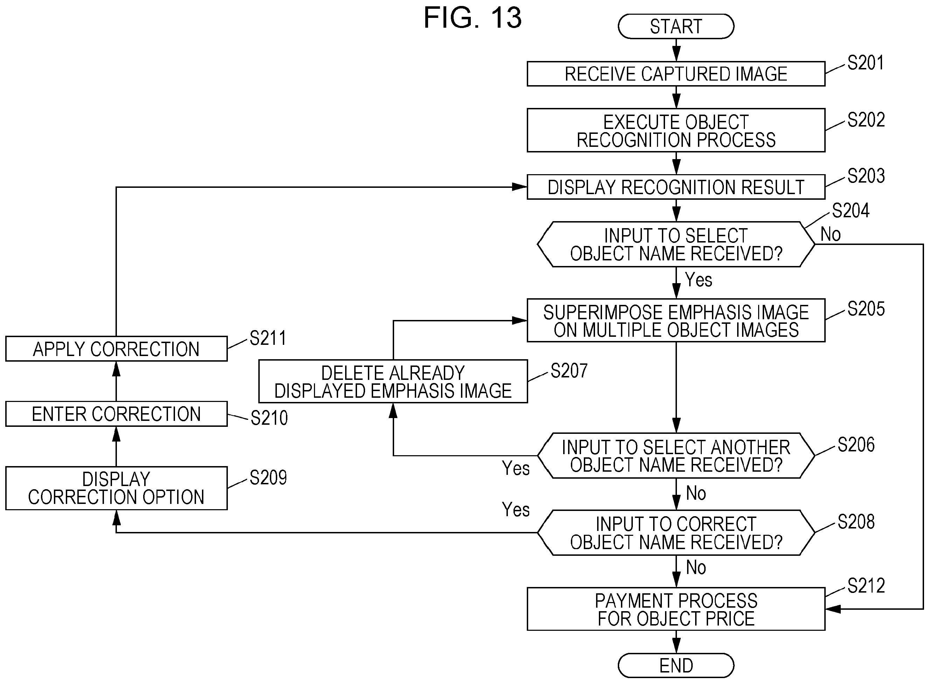

FIG. 13 is a flowchart illustrating operations in an information processing method in the variation 1 of the disclosure. The information processing method includes step S201 through step S212. Note that the description duplicating the above-described step S101 through step S112 is omitted.

Operations in step S201 through step S204 are identical to or similar to operations in the above-described step S101 through step S104 and the description thereof is omitted.

In a process in step S205, the controller 24 transmits to the display 13 an instruction that causes the display 13 to display the emphasis images 34a and 34a' respectively superimposed on the first object images 31a and 31a' in response to an input that is from the user via the input unit 22 and selects the first object name 32a.

Since step S206 through step S212 are the same as and/or similar to the above-described step S106 through step S112, the description thereof is omitted.

### (Variation 2 of Display Process)

Variation 2 of the display process is described below. Note that a procedure duplicating the display process described above is omitted.

Referring to FIG. 10, the controller 24 causes the display 13 to display the image 30. Detail of the process is described above and omitted.

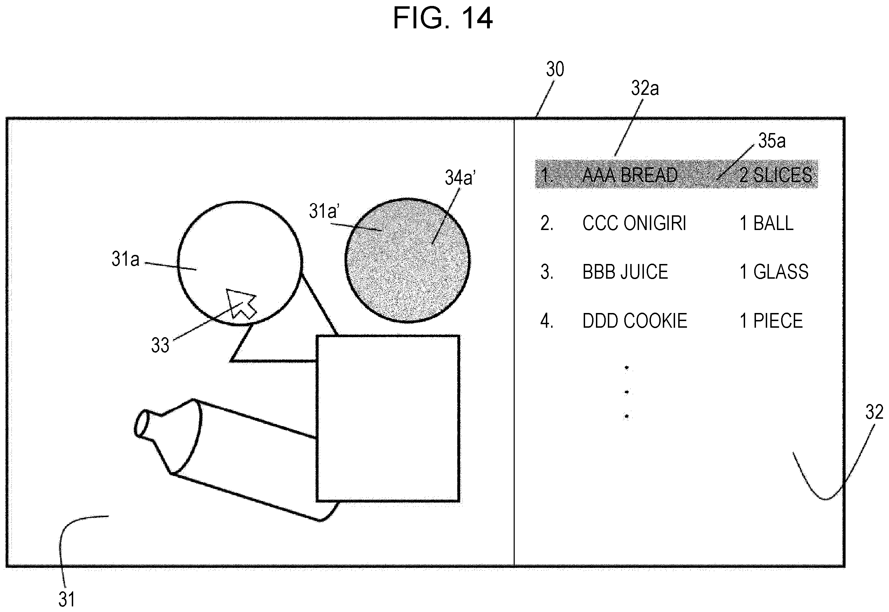

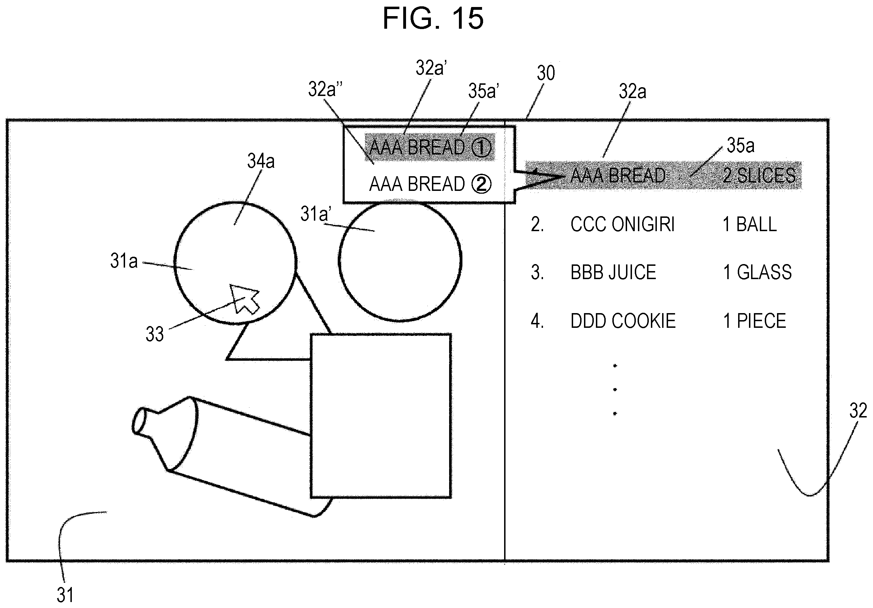

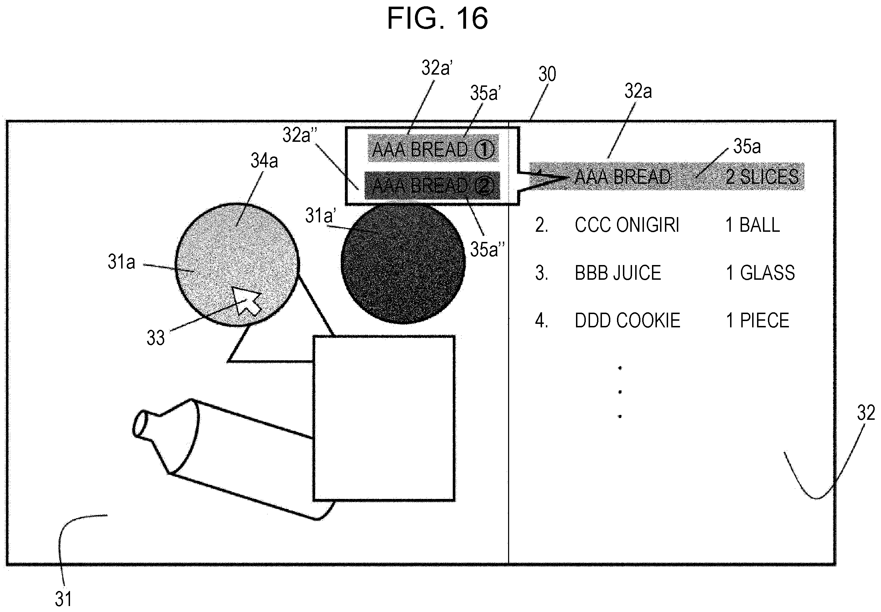

When the display 13 displays the image 30 as illustrated in FIG. 10, the user confirms the recognition result displayed on the display 13. At this time, the user selects the first object image 31a using the cursor 33 as illustrated in FIG. 14 to confirm whether the recognition result displayed on the image 32 is correct. When the user selects the first object image 31a, the display 13 displays the emphasis image 34a' superimposed on the first object image 31a' sorted as the same object as the first object image 31a and the emphasis image 34a superimposed on the first object name 32a. At this time, the emphasis image 34a' superimposed on the first object image 31a' may not necessarily be displayed. When the user selects the first object image 31a, the display 13 may display not only the emphasis image 34a superimposed on the first object name 32a but also the emphasis image 34a' on the corresponding first object name 32a' from among multiple first object names 32a' included in the first object name 32a as illustrated in FIG. 15. Also, when the user selects the first object image 31a, the display 13 may display, as illustrated in FIG. 16, the emphasis images 34a and 34a' superimposed on the first object image 31a and the first object image 31a' as the same object as the first object image 31a, and the emphasis images 34a, 35a', and 35a" superimposed on the first object names 32a, 32a', and 32a" corresponding to the first object images 31a and 31a'. The first object names 32a' and 32a" are object names of objects included in the first object names 32a. At this time, the emphasis image 34a superimposed on the first object image 31a and the emphasis image 34a' superimposed on the first object name 32a' corresponding to the first object image 31a may be in the same color. The emphasis image 34a' superimposed on the first object image 31a and the emphasis image 34a" superimposed on the first object name 32a" corresponding to the first object image 31a may be in the same color. Furthermore, the emphasis image 34a and the emphasis image 34a' may be different in color from the emphasis image 34a' and the emphasis image 34a".

### (System Action of Variation 2)

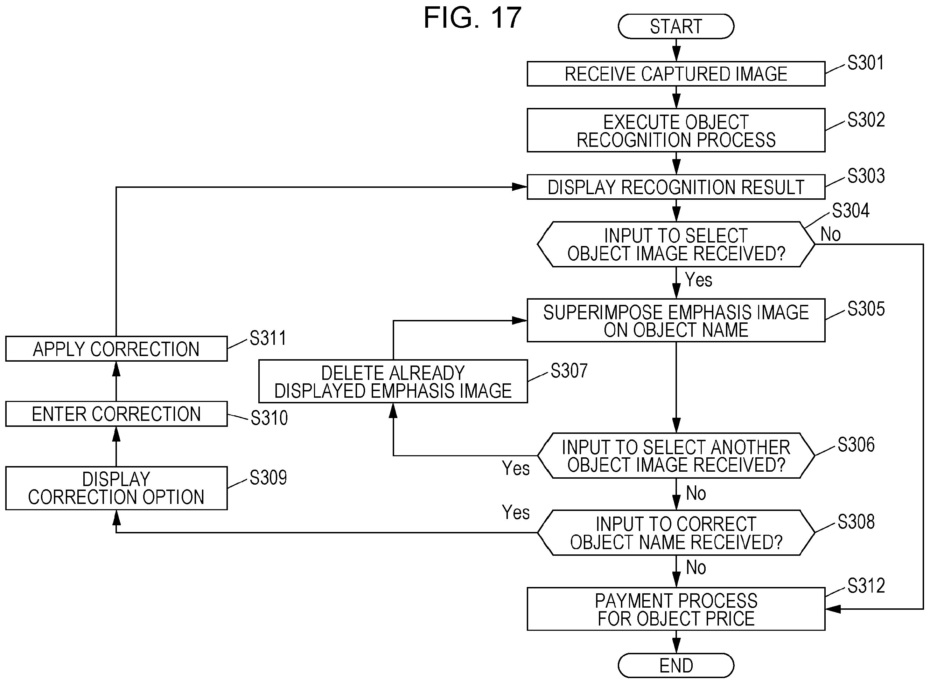

FIG. 17 is a flowchart illustrating operations in the information processing method of the variation 1 in the disclosure. The information processing method includes step S301 through step S312. Note that a description duplicating the above-described step S201 through step S212 is omitted.

Since step S301 through step S303 are the same as and/or similar to the above-described operations in step S201 through step S203, the description thereof is omitted.

The controller 24 determines whether the input unit 22 has received an input to select the first object image 31a in the image 31 (step S304).

The controller 24 proceeds to a process in step S305, upon determining that the input unit 22 has received the input to select the first object image 31a (step S304: YES). For example, when the input unit 22 has received a touch input on the first object image 31a as illustrated in FIG. 10, the controller 24 determines that the input unit 22 has received the input to select the first object image 31a.

The controller 24 proceeds to a process in step S308, upon determining that the input unit 22 has not received the input to select the first object image 31a (step S304: NO). For example, when the input unit 22 has received an input from the user to shift to the payment process, the controller 24 may determine that the input unit 22 has not received the input to select the first object image 31a. Note that when a predetermined time period has elapsed without any operation since the displaying of the image 30 as illustrated in FIG. 4, the controller 24 may determine that the input unit 22 has not received the input to select the first object image 31a.

In the process in step S305, the controller 24 transmits to the display 13 an instruction that causes the display 13 to display the emphasis image 34a superimposed on the first object name 32a in response to the input that is from the user via the input unit 22 and selects the first object image 31a.

The controller 24 determines whether the input unit 22 has received an input to select the second object image 31b in the image 31 (step S306).

The controller 24 proceeds to a process in step S307, upon determining that the input unit 22 has received the input to select the second object image 31b (step S306: YES). For example, when the input unit 22 has received a touch input on the second object image 31b, the controller 24 determines that the input unit 22 has received the input to select the second object image 31b.

The controller 24 proceeds to a process in step S312, upon determining that the input unit 22 has not received the input to select the second object image 31b (step S306: NO). For example, when the input unit 22 has received an input to shift to the payment process of the user, the controller 24 determines that the input unit 22 has not received the input to select the second object image 31b. Note that when a predetermined time period has elapsed without any operation, the controller 24 may determine that the input unit 22 has not received the input to select the second object image 31b.

In a process in step S307, the controller 24 transmits to the display 13 an instruction that causes the display 13 to delete the emphasis image 34a that is already displayed and superimposed on the first object image 31a in response to the input that is from the user via the input unit 22 and selects the second object image 31b. The controller 24 then returns to the process in step S305.

Since the processes in step S308 through step S312 are the same as and/or similar to the processes in step S208 through step S212, the description thereof is omitted.

### (Variation 3 of Display Process)

Variation 3 of the display process is described below. Note that a procedure duplicating the above-described display process is omitted.

Referring to FIG. 4, the controller 24 causes the display 13 to display the image 30. Detail of the process is described above and omitted.

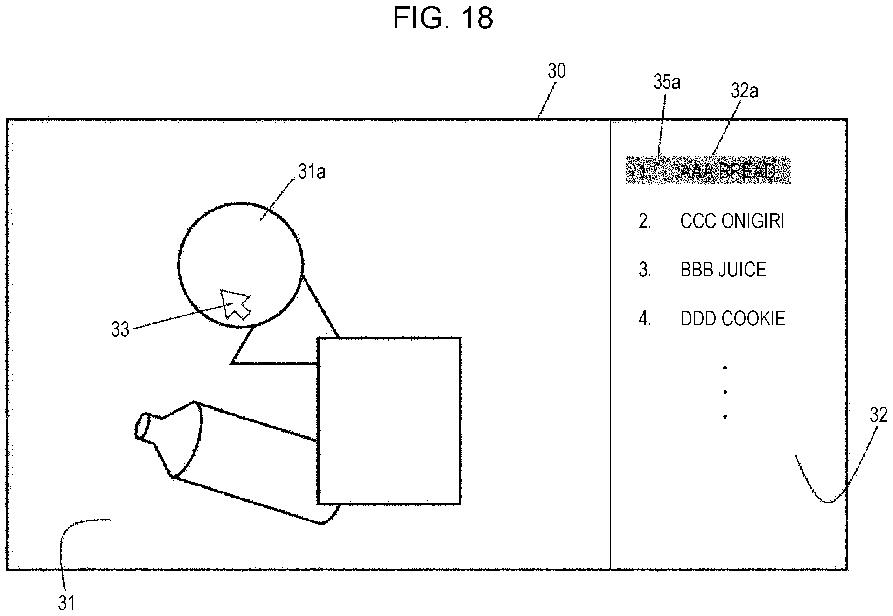

When the display 13 displays the image 30 illustrated in FIG. 4, the user confirms the recognition result displayed on the display 13. At this time, in order to confirm whether the recognition result displayed on the image 32 is correct, the user selects the first object image 31a using the cursor 33 as illustrated in FIG. 18. When the user has selected the first object image 31a, the display 13 displays the emphasis image 34a superimposed on the first object name 32a corresponding to the first object image 31a. The displaying of the emphasis image 34a emphasizes the first object name 32a. When the first object name 32a is emphasized to the user, not only the emphasis image 34a is superimposed but also a color, a thickness or a size of each font of the first object name 32a may be changed. In the embodiment, the user selects the first object name 32a using the cursor 33 but, without limitation to this, the user may directly select the first object name 32a using a touch screen. At this time, the cursor 33 may not be displayed.

With the corresponding first object name 32a displayed with emphasis in this way, the user may easily compare the recognition result with the object placed on the table 10. In this configuration, the user may easily confirm whether the recognition result is correct.

### (Action of System of Variation 2)

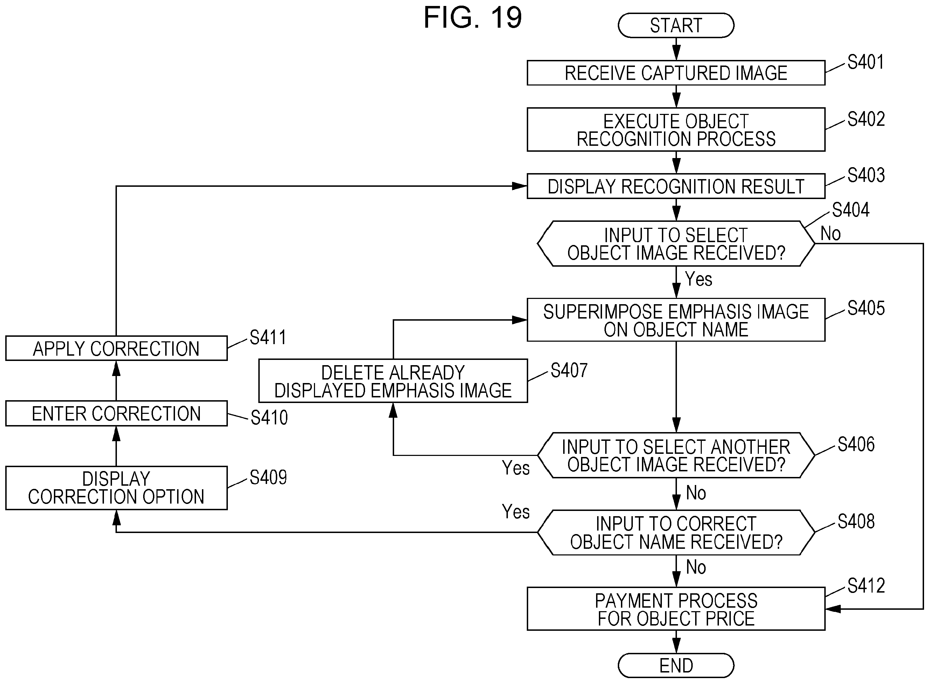

FIG. 19 is a flowchart illustrating operations in the information processing method in the variation 2 of the disclosure. The information processing method includes step S401 through step S412. Note that the description duplicating the above-described step S101 through step S112 is omitted.

Since operations in step S401 through S403 are the same as and/or similar to the operations in the above-described step S101 through step S103, the description of the operations in step S401 through S403 is omitted.

The controller 24 determines whether the input unit 22 has received the input to select the first object image 31a in the image 32 (step S404).

The controller 24 proceeds to a process in step S305 upon determining that the input unit 22 has received the input to select the first object image 31a (step S404: YES). For example, when the controller 24 determines that the input unit 22 has received a touch input on the first object name 32a as illustrated in FIG. 18, the controller 24 determines that the input unit 22 has received the input to select the first object name 32a.

The controller 24 proceeds to a process in step S308 upon determining that the input unit 22 has not received the input to select the first object image 31a (step S404: NO). For example, when the input unit 22 has received an input to shift to the payment process of the user, the controller 24 determines that the input unit 22 has not received the input to select the first object image 31a. Note that the determination at the controller 24 that the input unit 22 has not received the input to select the first object image 31a is not limited to the case described above, but may be a case when a predetermined time period has elapsed since the displaying of the image 30 as illustrated in FIG. 4.

In a process in step S405, the controller 24 transmits to the display 13 an instruction that causes the display 13 to display the emphasis image 34a superimposed on the first object name 32a in response to the input that is from the user via the input unit 22 and selects the first object image 31a.

The controller 24 determines whether the input unit 22 has received the input to select the second object image 31b in the image 32 (step S406).

The controller 24 proceeds to a process in step S307 upon determining that the input unit 22 has received the input to select the second object image 31b (step S406: YES). For example, when the input unit 22 has received a touch input on the second object image 31b, the controller 24 determines that the input unit 22 has received the input to select the second object image 31b.

The controller 24 proceeds to step S208 upon determining that the input unit 22 has not received the input to select the second object image 31b (step S406: NO). For example, when the input unit 22 has received the input to shift to the payment process of the user, the controller 24 determines that the input unit 22 has not received the input to select the second object image 31b. Note that the determination at controller 24 that the input unit 22 has not received the input to select the second object image 31b is not limited to the case described above, but may be a case when a predetermined time period has elapsed since the displaying of the image 30 as illustrated in FIG. 18.

In a process in step S407, the controller 24 transmits to the display 13 an instruction that causes the display 13 to delete the emphasis image 34a superimposed on the first object name 32a in response to the input that is from the user via the input unit 22 and selects the second object image 31b. The controller 24 then returns to the process in step S405.

The controller 24 determines whether the input unit 22 has received an input to correct the third object name 32c' determined to correspond to the third object image 31c (step S408).

The controller 24 proceeds to step S409 upon determining that the input unit 22 has received the input to correct the third object name 32c' (step S408: YES). For example, when the input unit 22 has received a touch input to select the third object name 32c' with the emphasis image 34c superimposed on the third object name 32c', the controller 24 determines that the input unit 22 has received the input to correct the third object name 32c'.

Since step S409 through step S412 duplicating the above-described step S109 through step S112, the description thereof is omitted.

### (Variation 4 of Display Process)

Variation 4 of the display process is described below. Note that a procedure duplicating the above-described display process is omitted.

Referring to FIG. 4, the controller 24 causes the display 13 to display the image 30. Detail of the process is described above and omitted.

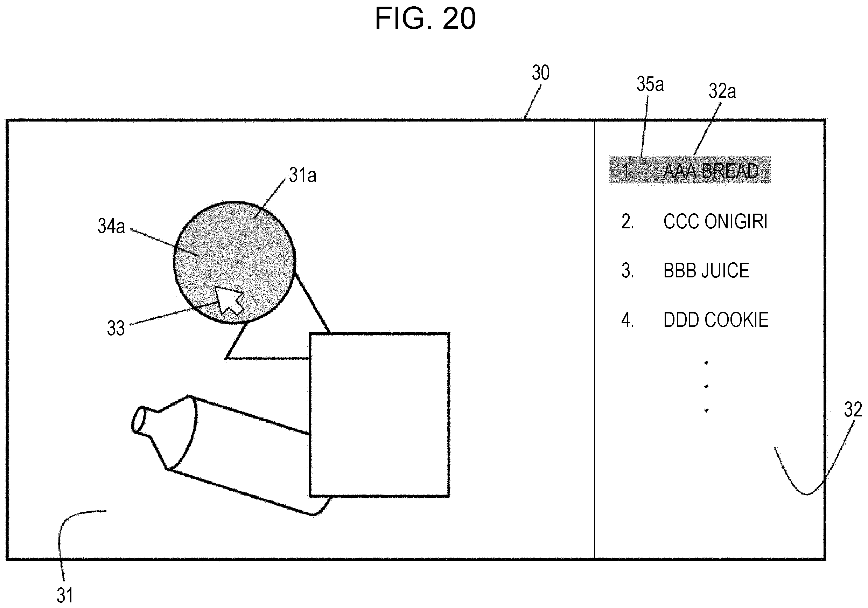

The user confirms the recognition result displayed on the display 13 when the display 13 displays the image 30 illustrated in FIG. 4. At this time, in order to confirm whether the recognition result displayed in the image 32 is correct, the user selects the first object image 31a using the cursor 33 as illustrated in FIG. 20. When the user has selected the first object image 31a, the display 13 displays each of the emphasis image 34a superimposed on the first object image 31a and the emphasis image 34a superimposed on the first object name 32a corresponding to the first object image 31a. At this time, the emphasis image 34a and the emphasis image 34b are displayed in the same color but may be displayed without limitation to this.

Since the emphasis image 34a superimposed on the first object image 31a and the emphasis image 34b superimposed on the first object name 32a corresponding to the object image 32a are concurrently displayed as described above, the user may easily confirm the correspondence relationship between the first object image 31a and the first object name 32a.

### (System Action of Variation 4)

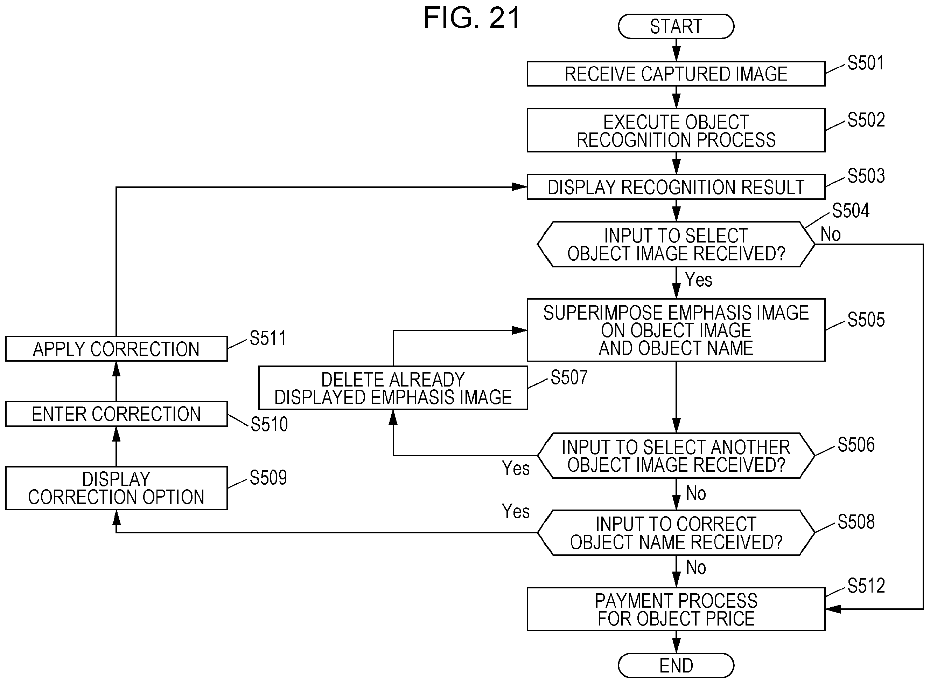

FIG. 21 is a flowchart illustrating operations in a recognition method in the variation 3 of the disclosure. The information processing method includes steps S501 through S512. Note that the description duplicating the above-described step S401 through step S412 is omitted.

Since operations in step S501 through step S504 are the same as and/or similar to the operations in the above-described step S401 through step S404, the description thereof is omitted.

In a process in step S505, the controller 24 transmits to the display 13 an instruction that causes the display 13 to display both the emphasis image 34a superimposed on the first object image 31a and the emphasis image 34a superimposed on the first object name 32a in response to the input that is from the user via the input unit 22 and selects the first object image 31a.

Since step S506 duplicates step S406, the description thereof is omitted.

In a process in step S507, the controller 24 transmits to the display 13 an instruction that causes the display 13 to delete the emphasis image 34a superimposed on the first object image 31a and the emphasis image 34a superimposed on the first object name 32a in response to the input that is from the user via the input unit 22 and selects the second object image 31b. The controller 24 then returns to the process in step S505.

Since operations in step S508 through step S512 are the same as and/or similar to the operations in step S408 through step S412, the description thereof is omitted.

### (Variation 5 of Display Process)

Variation 5 of the display process is described below. Note that a procedure duplicating the above-described display process is omitted.

Referring to FIG. 4, the controller 24 causes the display 13 to display the image 30. Detail of the process is described above and omitted.

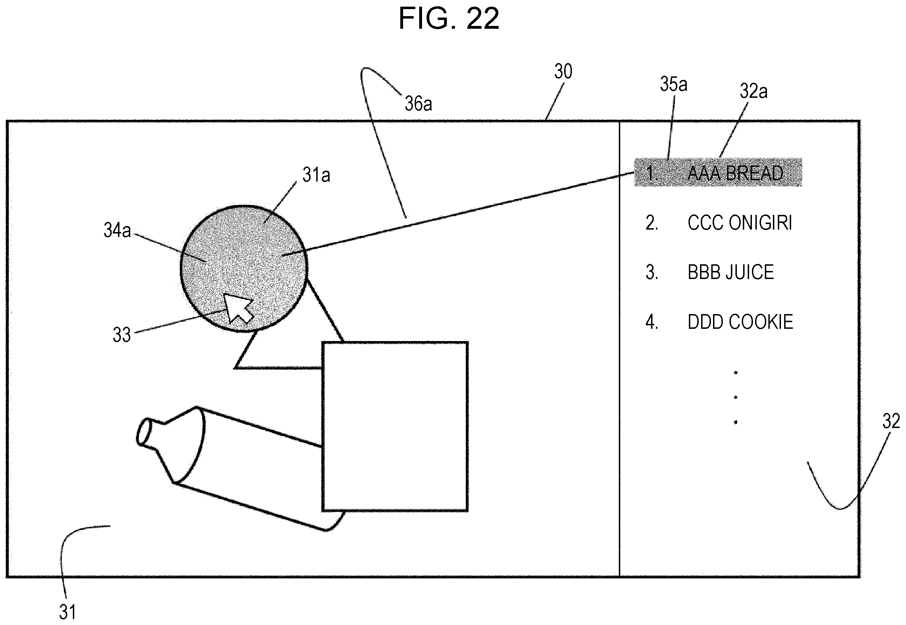

The user confirms the recognition result displayed on the display 13 when the display 13 displays the image 30 as illustrated in FIG. 4. At this time, in order to confirm whether the recognition result displayed on the image 32 is correct, the user selects the first object image 31a using the cursor 33 as illustrated in FIG. 22. When the user has selected the first object image 31a, the display 13 displays each of the emphasis image 34a superimposed on the first object image 31a, the emphasis image 34a superimposed on the first object name 32a corresponding to the first object image 31a, and an association line 36a connecting the first object image 31a to the first object name 32a. At this time, the emphasis image 34a and the emphasis image 34b are displayed in the same color but may be displayed without limitation to this. The association line 36a is drawn as a solid line in the embodiment, but without limitation to this, may be drawn as a broken line.

Since the emphasis image 34a superimposed on the first object image 31a, the emphasis image 34b superimposed on the first object name 32a corresponding to the object image 32a, and the association line 36a connecting the first object image 31a to the first object name 32a are concurrently displayed as described above, the user may easily confirm the correspondence relationship between the first object image 31a and the first object name 32a.

### (System Action of Variation 5)

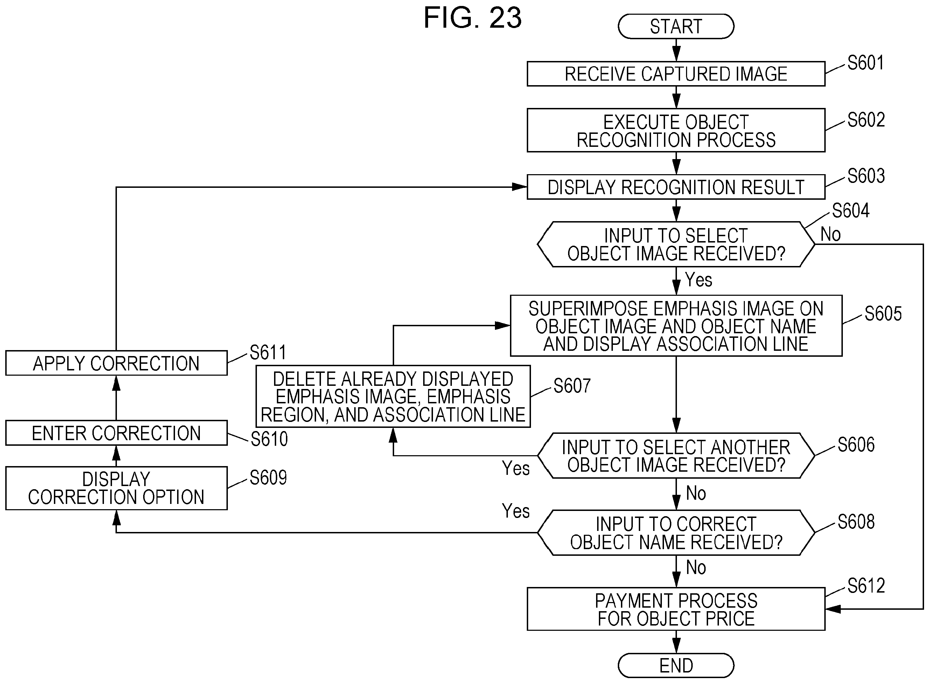

FIG. 23 is a flowchart illustrating operations in the recognition method in the variation 4 of the disclosure. The information processing method includes step S601 through step S612. Note that the description duplicating the above-described step S501 through step S512 is omitted.

Since operations in step S601 through step S604 are the same as and/or similar to the operations in the above-described step S501 through step S504, the description thereof is omitted.

In a process in step S605, the controller 24 transmits to the display 13 an instruction that causes the display 13 to display the emphasis image 34a superimposed on the first object image 31a, the emphasis image 34a superimposed on the first object name 32a, and the association line 36a connecting the first object image 31a to the first object name 32a in response to the input that is from the user via the input unit 22 and selects the first object image 31a.

Since step S606 duplicates step S506, the description thereof is omitted.

In a process in step S607, the controller 24 transmits to the display 13 an instruction that causes the display 13 to delete the emphasis image 34a superimposed on the first object image 31a, the emphasis image 34a superimposed on the first object name 32a, and the association line 36a connecting the first object image 31a to the first object name 32a in response to the input that is from the user via the input unit 22 and selects the second object image 31b. The controller 24 then returns the process in step S605.

Since step S608 through step S612 are the same as and/or similar to the step S508 through step S512, the description thereof is omitted.

### (Variation 6 of Display Process)

Variation 6 of the display process is described below. Note that a procedure duplicating the above-described display process is omitted.

Referring to FIG. 4, the controller 24 causes the display 13 to display the image 30. Detail of the process is described above and omitted.

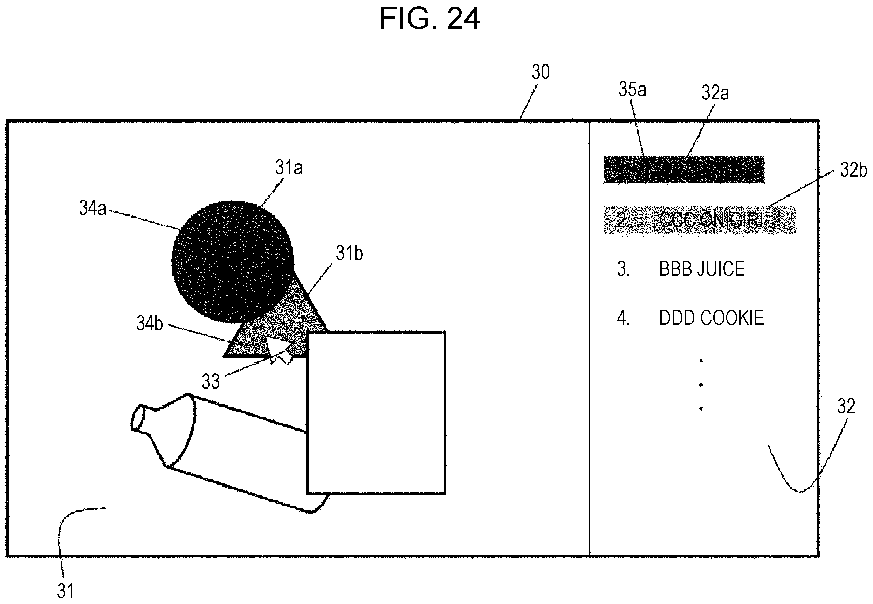

The user confirms the recognition result displayed on the display 13 when the display 13 displays the image 30 as illustrated in FIG. 4. At this time, in order to confirm whether the recognition result displayed on the image 32 is correct, the user selects the first object image 31a using the cursor 33 as illustrated in FIG. 24. When the user has selected the first object image 31a, the display 13 displays each of the emphasis image 34a superimposed on the first object image 31a and the emphasis image 34a superimposed on the first object name 32a corresponding to the first object image 31a. Detail of the process is described above and omitted.

After confirming the first object name 32a emphasized by the emphasis image 34a and displayed, the user newly selects the second object image 31b as another object using the cursor 33 as illustrated in FIG. 20. At this time, the controller 24 changes the colors of the emphasis image 34a superimposed on the already confirmed first object image 31a and the emphasis image 34a superimposed on the first object name 32a and superimposes the emphasis image 34b on the newly selected second object image 31b and the emphasis image 34b on the second object name 32b corresponding to the second object image 31b. At this time, the emphasis image 34a and the emphasis image 34b may be displayed in different colors. The emphasis image 34a and the emphasis image 34b may be displayed in different colors in the same and/or similar manner. By differentiating the emphasis image 34a from the emphasis image 34b in display format, the emphasis image 34a from the emphasis image 34b in display format, the user may easily recognize that, for example, the first object name 32a has already been confirmed.

When the user selects a new second object image 31b after confirming the first object image 31a and the first object name 32a, the first object image 31a and the first object name 32a are displayed with emphasis in color different from the second object image 31b. Therefore, the user may easily determine whether the displayed objects have already been confirmed.

### (System Action of Variation 6)

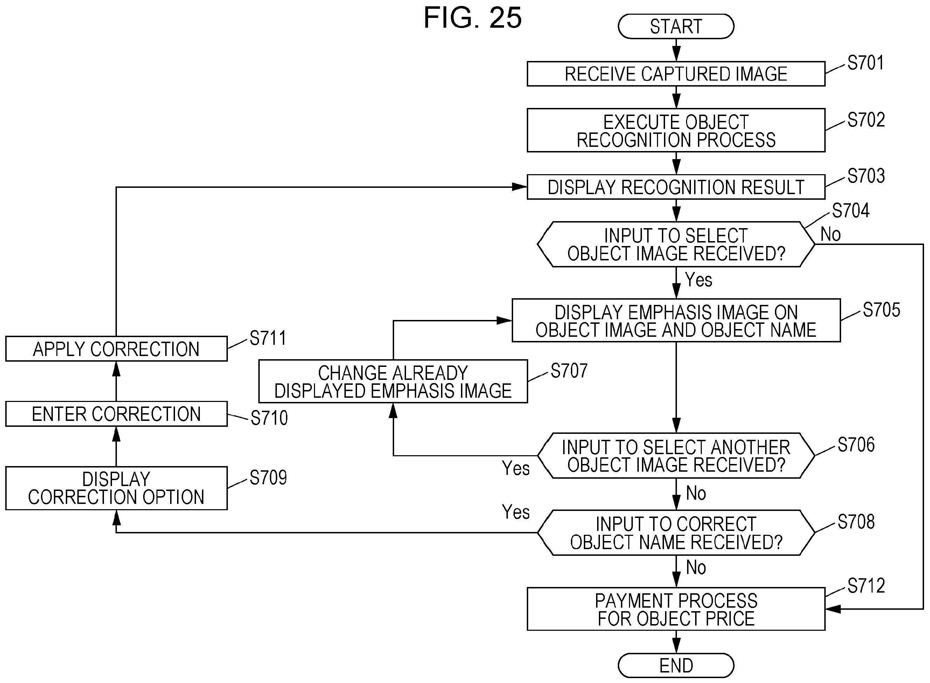

FIG. 25 is a flowchart illustrating operations in the recognition method in the variation 6 of the disclosure. The information processing method includes step S701 through step S712. Note that the description duplicating the above-described step S501 through step S512 is omitted.

Since operations in step S701 through step S706 are the same as and/or similar to the operations in the above-described step S501 through step S506, the description thereof is omitted.

In a process in step S707, the controller 24 transmits to the display 13 an instruction that causes the display 13 to display the emphasis image 34a superimposed on the first object image 31a, and the emphasis image 34a superimposed on the first object name 32a, in a color different from the color displayed in step S705, in response to the input that is from the user via the input unit 22 and selects the second object image 31b. The controller 24 then returns to the process in step S705.

Since step S708 through step S712 are the same as and/or similar to step S708 through step S712, the description thereof is omitted.

### (Variation 7 of Display Process)

Variation 7 of the display process is described below. Note that a procedure duplicating the above-described display process is omitted.

Referring to FIG. 4, the controller 24 causes the display 13 to display the image 30. Detail of the process is described above and omitted.

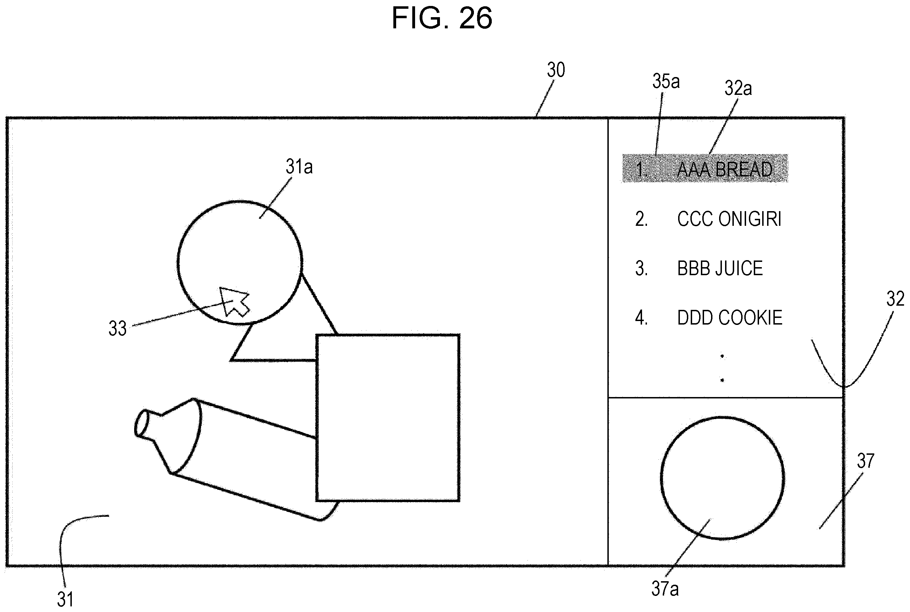

The user confirms the recognition result displayed on the display 13 when the display 13 displays the image 30 as illustrated in FIG. 4. At this time, in order to confirm whether the recognition result displayed on the image 32 is correct, the user selects the first object image 31a using the cursor 33 as illustrated in FIG. 26. When the user has selected the first object image 31a, the display 13 displays the emphasis image 34a superimposed on the first object name 32a corresponding to the first object image 31a. When the emphasis image 34a is displayed, a registered image 37a corresponding to the first object image 31a is displayed together. The registered image 37a is the image of an object stored on the memory 23. In the embodiment, the registered image 37a is displayed at a lower right of the image 30 in the embodiment but may be displayed without limitation to this. The registered image 37a is displayed together when the emphasis image 34a is displayed as illustrated in FIG. 26 but without limitation to this, the registered image 37a may be displayed together when the emphasis image 34a is displayed. Furthermore, the registered image 37a may be changed in response to the posture, such as the direction, the tilt, or the like, of the first object image 31a such that the registered image 37a is displayed in the same direction or at the same tilt as the first object image 31a.

Displaying additionally the registered image 37a together with the emphasis image 34a in this way improves confirmation accuracy of the recognition result of the user.

### (System Action of Variation 7)

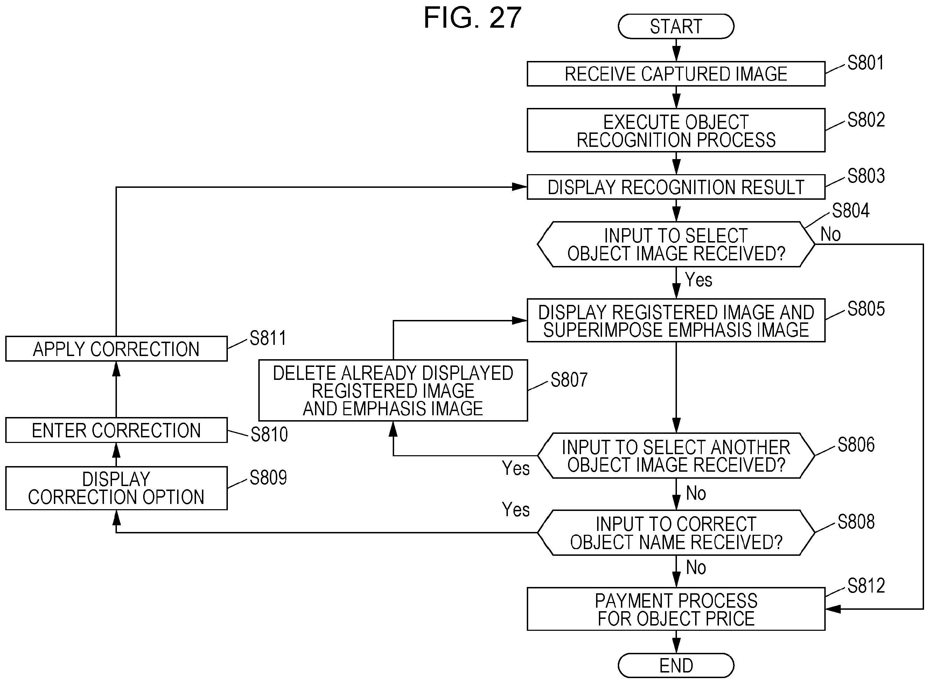

FIG. 27 is a flowchart illustrating operations in the recognition method in the variation 7 of the disclosure. The information processing method includes step S801 through step S812. Note that the description duplicating the above-described step S401 through step S412 is omitted.

Since operations in step S801 through step S804 are the same as and/or similar to the operations in the above-described step S401 through step S404, the description thereof is omitted.

In a process in step S805, the controller 24 transmits to the display 13 an instruction that causes the display 13 to display both the emphasis image 34a superimposed on the first object name 32a corresponding to the first object image 31a, and the registered image 37a corresponding to the first object image 31a in response to the input that is from the user via the input unit 22 and selects the first object image 31a.

Since step S806 duplicates step S406, the description thereof is omitted.

In a process in step S807, the controller 24 transmits to the display 13 an instruction that causes the display 13 to delete the emphasis image 34a superimposed on the first object name 32a, and the registered image 37a in response to the input that is from the user via the input unit 22 and selects the second object image 31b. The controller 24 then returns to the process in step S805.

Since step S808 through step S812 are the same as and/or similar to step S408 through step S412, the description thereof is omitted.

### (Variation 8 of Display Process)

Variation 8 of the display process is described below. Note that a procedure duplicating the above-described display process is omitted.

Referring to FIG. 4, the controller 24 causes the display 13 to display the image 30. Detail of the process is described above and omitted.

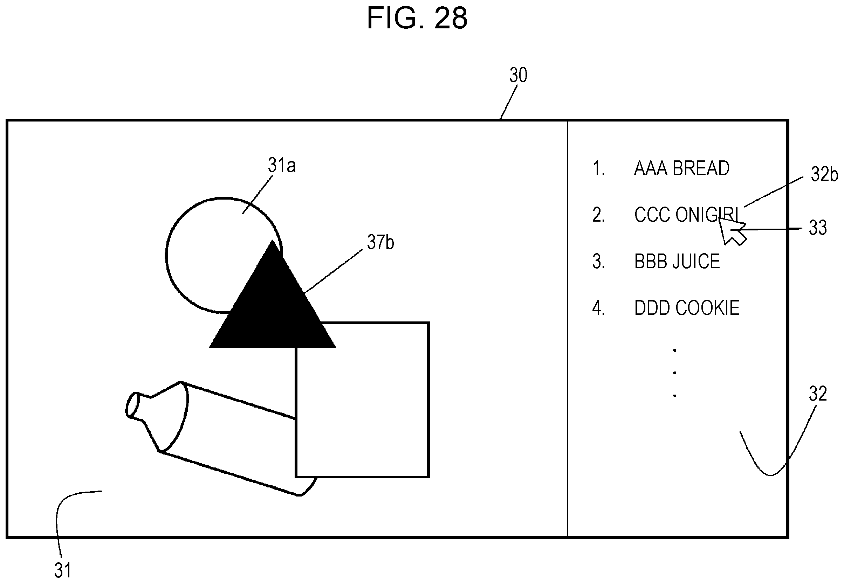

The user confirms the recognition result displayed on the display 13 when the display 13 displays the image 30 as illustrated in FIG. 4. At this time, in order to confirm whether the recognition result displayed on the image 32 is correct, the user selects the second object name 32b using the cursor 33 as illustrated in FIG. 28. When the user has selected the second object name 32b, the display 13 displays a registered image 37b corresponding to the second object name 32b and superimposed on the second object image 31b corresponding to the second object name 32b. In the embodiment, the second object image 31b is superimposed on and beneath another first object image 31a. At this time, the registered image 37b is superimposed on the corresponding second object image 31b and is also superimposed on a portion where the first object image 31a is superimposed on the second object image 31b.

Even when the second object images 31b are superimposed on each other and correctness confirmation of an object is difficult, the superimposition of the registered image 37b on the second object images 31b may cause the object to be smoothly confirmed.

### (Action of System of Variation 8)

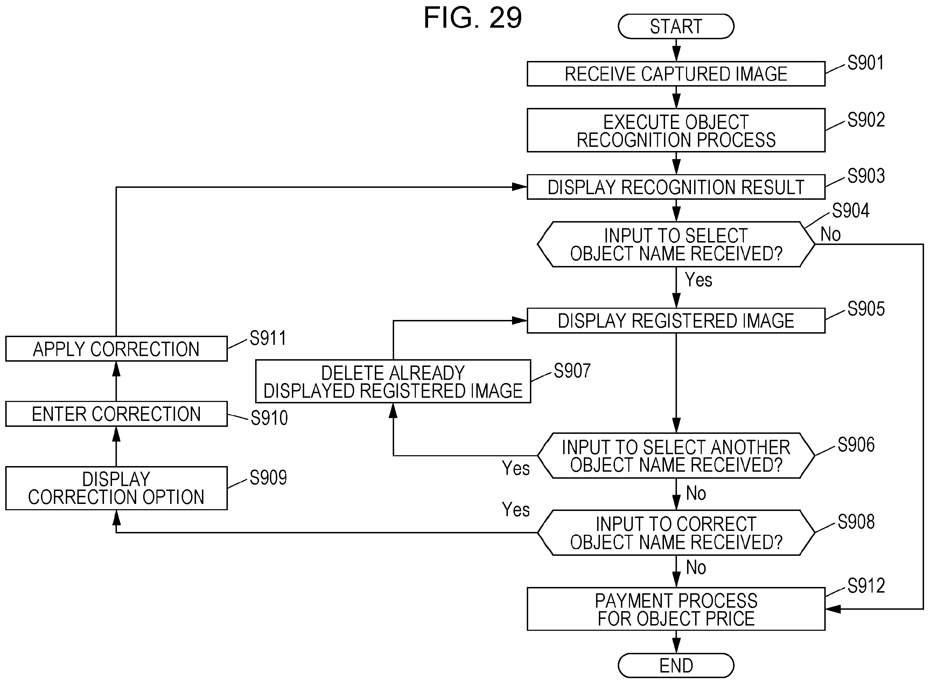

FIG. 29 is a flowchart illustrating operations in the information processing method in the variation 7 of the disclosure. The information processing method includes step S901 through step S912. Note that the description duplicating the above-described step S101 through step S112 is omitted.

Since step S901 through step S904 duplicates the above-described step S101 through step S104, the description thereof is omitted.

In a process in step S905, the controller 24 transmits to the display 13 an instruction that causes the display 13 to display the registered image 37a superimposed on the first object image 31a in response to the input that is from the user via the input unit 22 and selects the first object name 32a.

Since step S906 duplicates step S106, the description thereof is omitted.

In a process in step S907, the controller 24 transmits to the display 13 an instruction that causes the display 13 to delete the registered image 37a superimposed on the first object image 31a in response to the input that is from the user via the input unit 22 and selects the second object name 32b. The controller 24 then returns to the process in step S905.

Since step S908 through step S912 duplicate step S108 through step S112, the description thereof is omitted.

The disclosure has been described in accordance with the drawings and the embodiment and note that any person skilled in the art may easily perform a variety of variations or corrections in accordance with the disclosure. Therefore keep in mind that these variations, corrections or a combination of the embodiments fall within the scope of the disclosure.

In the disclosure, the description, such as "the first" or "the second" is an identifier identifying the configurations. In the disclosure, in the configurations identified by the description, such as "the first" or "the second," numbers are interchangeable in the configurations. For example, identifiers "the first" and "the second" of a first object and a second object are interchangeable. The interchange of the identifiers are concurrently performed. After the interchange of the identifiers, the configurations are identified. The identifiers may be deleted. The configurations with the identifiers deleted may be identified using reference signs. In the disclosure, only the description, such as "the first" or "the second" should not be used as the interpretation of the order of configurations or the basis of the presence of an identifier having a small number.
(1) In an embodiment, an information processing device includes:
   an acquisition unit configured to receive a captured image including a first object image as an image of a first object; and
   a controller configured to cause a display to display the first object image and a recognition result of the first object;
   wherein the controller is further configured to cause the display to display, upon receiving a selected one of the first object image and the recognition result of the first object from an input unit, an unselected other of the first object image and the recognition result of the first object with emphasis.
(2) In the information processing device according to the above-described (1), wherein the captured image includes a second object image as an image of a second object;
   wherein the controller is configured to cause the display to display the second object image and a recognition result of the second object; and
   wherein upon receiving, from the input unit, a selected one of the second object image and the recognition result of the second object after displaying one of the first object image and the recognition result of the first object with emphasis, the controller is configured to delete a display screen that emphasizes the first object image or the recognition result of the first object, and cause the display to display with emphasis an unselected other of the second object image and the recognition result of the second object.
(3) In the information processing device according to the above-described (2), wherein upon receiving a new selection, into the input unit, of one of the second object image and the recognition result of the second object after displaying one of the first object image or the recognition result of the first object with emphasis, the controller is configured to change a display format of the display screen that emphasizes the first object image or the recognition result of the first object, and cause the display to display with emphasis an unselected other of the second object and the recognition result of the second object.
(4) In the information processing device according to the above-described (1) through (3), wherein the controller is configured to cause the display to display both a display screen emphasizing either the first object image or the recognition result of the first object and a line connecting the first object image to the recognition result of the first object.
(5) The information processing device according to the above-described (1) through (3) further includes a memory configured to memorize a registered image of the object,
   wherein the controller is configured to cause the display to further display both a display screen that emphasizes either the first object image or the recognition result of the first object and the registered image of the first object.
(6) In the information processing device according to the above-described (5), wherein the controller is configured to cause the display to display the registered image superimposed on the first object image.
(7) In the information processing device according to the above-described (6), wherein the controller is configured to cause the display to display the registered image responsive to a posture of an object corresponding to the first object image.
(8) In the information processing device according to the above-described (1) through (4), wherein the captured image includes a plurality of first object images, and
   the controller is configured to cause the display to display the recognition result of the first objects and a number of the first objects recognized from the captured image.
(9) In the information processing device according to the above-described (8), wherein upon receiving from the input unit a selection of the recognition result of the first object, the controller is configured to cause the display to further display each of a plurality of the recognition results of the first object.
(10) In the information processing device according to the above-described (1) through (9), wherein the captured image includes a second object image that is an image of a second object that is same type as the first object, and
   wherein the controller is configured to cause the display to display an object name that is a high-level concept of both the first object and the second object.
(11) In the information processing device according to the above-described (1) through (10), wherein the controller is configured to cause the display to display with emphasis both the first object image and the recognition result of the first object, upon receiving from the input unit a selection of one of the first object image and the recognition result of the first object.
(12) In the information processing device according to the above-described (1) through (11), wherein the controller is configured to cause the display to display a correction option for correcting the recognition result of the first object.
(13) In an embodiment, an information processing method includes:
   receiving an image including at least one object,
   recognizing what object an object contained in the image is,
   outputting a recognized recognition result and the image, and
   in response to receiving an input of a user selecting one of the outputted recognition result and the object, outputting a display screen to display with emphasis an other one not selected by the user.
(14) In an embodiment, an information processing device includes:
   a display configured to display, when an image including a first object and a recognition result of the first object are displayed and one of the first object and the recognition result of the first object is selected by a user, an unselected other of the first object and the recognition result with emphasis.

### REFERENCE SIGNS

1 payment system
2 network
3 information processing system
4 server
10 table
10s top surface
11 support pillar
12 imaging unit
13 display
14 imaging device
20 information processing device
21 communication unit
22 input unit
23 memory
24 controller
34 34a 34b emphasis images
35 35a 35b emphasis images
36 36a association line
37 37a registered image

## Claims

1. An information processing device comprising:
an acquisition unit configured to receive a captured image including a first object image as an image of a first object; and
a controller configured to cause a display to display the first object image and a recognition result of the first object;
wherein the controller is further configured to cause the display to display, upon receiving a selected one of the first object image and the recognition result of the first object from an input unit, an unselected other of the first object image and the recognition result of the first object with emphasis.

2. The information processing device according to claim 1, wherein the captured image includes a second object image as an image of a second object;
wherein the controller is configured to cause the display to display the second object image and a recognition result of the second object; and
wherein upon receiving, from the input unit, a selected one of the second object image and the recognition result of the second object after displaying one of the first object image and the recognition result of the first object with emphasis, the controller is configured to delete a display screen that emphasizes the first object image or the recognition result of the first object, and cause the display to display with emphasis an unselected other of the second object image and the recognition result of the second object.

3. The information processing device according to claim 2, wherein upon receiving a new selection, into the input unit, of one of the second object image and the recognition result of the second object after displaying one of the first object image or the recognition result of the first object with emphasis, the controller is configured to change a display format of the display screen that emphasizes the first object image or the recognition result of the first object, and cause the display to display with emphasis an unselected other of the second object and the recognition result of the second object.

4. The information processing device according to claim 1, wherein the controller is configured to cause the display to display both a display screen emphasizing either the first object image or the recognition result of the first object and a line connecting the first object image to the recognition result of the first object.

5. The information processing device according to claim 1 to 3, further comprising a memory configured to memorize a registered image of the object,
wherein the controller is configured to cause the display to further display both a display screen that emphasizes either the first object image or the recognition result of the first object and the registered image of the first object.

6. The information processing device according to claim 5, wherein the controller is configured to cause the display to display the registered image superimposed on the first object image.

7. The information processing device according to claim 6, wherein the controller is configured to cause the display to display the registered image responsive to a posture of an object corresponding to the first object image.

8. The information processing device according to claim 1, wherein the captured image includes a plurality of first object images, and
the controller is configured to cause the display to display the recognition result of the first objects and a number of the first objects recognized from the captured image.

9. The information processing device according to claim 8, wherein upon receiving from the input unit a selection of the recognition result of the first object, the controller is configured to cause the display to further display each of a plurality of the recognition results of the first object.

10. The information processing device according to claim 1, wherein the captured image includes a second object image that is an image of a second object that is same type as the first object, and
wherein the controller is configured to cause the display to display an object name that is a high-level concept of both the first object and the second object.

11. The information processing device according to claim 1, wherein the controller is configured to cause the display to display with emphasis both the first object image and the recognition result of the first object, upon receiving from the input unit a selection of one of the first object image and the recognition result of the first object.

12. The information processing device according to claim 1, wherein the controller is configured to cause the display to display a correction option for correcting the recognition result of the first object.

13. An information processing method comprising:
receiving an image including at least one object,
recognizing what object an object contained in the image is,
outputting a recognized recognition result and the image, and
in response to receiving an input of a user selecting one of the outputted recognition result and the object, outputting a display screen to display with emphasis an other one not selected by the user.

14. An information processing device comprising:
a display configured to display, when an image including a first object and a recognition result of the first object are displayed and one of the first object and the recognition result of the first object is selected by a user, an unselected other of the first object and the recognition result with emphasis.
